# EUROPEAN PATENT APPLICATION

(11) **EP 3 330 825 A1**
(43) Date of publication of application: **06.06.2018**
(21) Application number: 16830875.7
(22) Date of filing: 29.07.2016
(51) Int. Cl.: G05D 1/02, G06Q 50/30, G06Q 50/10

(54) **APPARATUS AND METHOD FOR CONTROLLING AN AUTONOMOUS DRIVING VEHICLE**

(30) Priority: 30.07.2015 US 201562199182 P; 02.05.2016 KR 20160054109; 28.07.2016 KR 20160095970
(71) Applicant: Samsung Electronics Co., Ltd., Suwon-si, Gyeonggi-do 16677 (KR)
(72) Inventor: CRONIN, John, Suwon-si Gyeonggi-do 16678 (KR); D'ANDREA, Michael, Suwon-si Gyeonggi-do 16678 (KR)
(74) Representative: Hylarides, Paul Jacques
(86) International application number: PCT/KR2016/008324
(87) International publication number: WO 2017/018842

(57) **Abstract**

Provided are a method and apparatus for controlling an autonomous vehicle. The method includes determining a driving mode optimized for a passenger, based on at least one of context information about the passenger and ambient environment information of the autonomous vehicle, and controlling the autonomous vehicle according to the determined driving mode.

## Description

### TECHNICAL FIELD

The present invention relates to methods and apparatuses for controlling an autonomous vehicle.

### BACKGROUND ART

Recently, interest in autonomous vehicles has risen. In particular, in order to relieve traffic congestion due to increasing demands for vehicles and to safely avoid obstacles, such as other persons or vehicles, various added functions related to self-driving have been continually developed. For example, there are a number of algorithms related to a lane keeping system.

In addition, with the expansion of internet connectivity, the amount of data generated from various devices or automobiles has rapidly increased, and thus, various services using the increased amount of data have appeared.

Thus, a method and an autonomous vehicle are required, which may provide a passenger with a passenger-friendly autonomous driving experience by using various data.

### DETAILED DESCRIPTION OF THE INVENTION

### TECHNICAL PROBLEM

The present invention provides methods and apparatuses for controlling an autonomous vehicle. The technical objectives of the inventive concept are not limited to the above disclosure; other objectives may become apparent to those of ordinary skill in the art based on the following descriptions.

### TECHNICAL SOLUTION

According to an aspect of the present invention, a device for controlling an autonomous vehicle includes: an interface configured to obtain at least one of context information about a passenger of the autonomous vehicle and ambient environment information of the autonomous vehicle; and a processor configured to determine a driving mode optimized for the passenger based on the obtained at least one of the context information and the ambient environment information, and control the autonomous vehicle according to the determined driving mode.

According to another aspect of the present invention, a method of controlling an autonomous vehicle includes: obtaining at least one of context information about a passenger of the autonomous vehicle and ambient environment information of the autonomous vehicle; determining a driving mode optimized for the passenger, based on the obtained at least one of the context information and the ambient environment information; and controlling the autonomous vehicle according to the determined driving mode.

According to another aspect of the present invention, a non-transitory computer-readable recording medium has recorded thereon a computer program for executing the method of controlling the autonomous vehicle.

According to another aspect of the present invention, a method of controlling a vehicle includes: obtaining user environment information; determining a driving style, based on the user environment information; and setting a driving parameter of the vehicle according to the driving style.

### ADVANTEGEOUS EFFECTS OF THE INVENTION

As described above, according to the one or more of the above embodiments, a driving mode suitable for a situation in which the passenger of the autonomous vehicle is is provided, and thus, a passenger-friendly driving environment is provided.

### DESCRIPTION OF THE DRAWINGS

FIG. 1 shows an example of an autonomous vehicle.
FIG. 2 is a view for describing an autonomous vehicle.
FIG. 3 is a view for describing a vehicle control device for controlling an autonomous vehicle.
FIG. 4 shows a vehicle control device determining a driving mode based on destination information of a passenger.
FIG. 5 shows an example of a connection relationship between destination information of a passenger and a driving mode.
FIG. 6 shows an example of determining a driving mode via a vehicle control device, based on destination information of a passenger.
FIG. 7 shows an example of controlling an autonomous vehicle via a vehicle control device, using an acceleration driving mode.
FIG. 8 shows a vehicle control device determining a driving mode based on schedule information of a passenger.
FIG. 9 shows an example of determining a driving mode via a vehicle control device, based on schedule information of a passenger.
FIG. 10 shows a vehicle control device determining a driving mode based on physical state information of a passenger.
FIG. 11 shows an example of determining a driving mode based on sleeping state information of a passenger and controlling an autonomous vehicle based on the determined driving mode, via a vehicle control device.
FIG. 12 shows an example of controlling an autonomous vehicle via a vehicle control device, using a quiet driving mode.
FIG. 13 shows an example of determining a driving mode based on concentration state information of a passenger and controlling an autonomous vehicle based on the determined driving mode, via a vehicle control device.
FIG. 14 shows an example of determining a driving mode via a vehicle control device, based on emergency state information of a passenger.
FIG. 15 shows an example of a vehicle control device determining a driving mode based on identification information of a passenger.
FIG. 16 shows an example of determining a driving mode via a vehicle control device, based on identification information of a passenger.
FIG. 17 shows an example of a vehicle control device determining a driving mode based on location information of an autonomous vehicle.
FIG. 18 shows an example of determining a driving mode based on expressway location information and controlling an autonomous vehicle based on the determined driving mode, via a vehicle control device.
FIG. 19 shows an example of determining a driving mode based on downtown location information and controlling an autonomous vehicle based on the determined driving mode, via a vehicle control device.
FIG. 20 shows an example of controlling an autonomous vehicle via a vehicle control device, using an eco-driving mode.
FIG. 21 shows an example of determining a driving mode based on near landmark location information and controlling an autonomous vehicle based on the determined driving mode, via a vehicle control device.
FIG. 22 shows an example of a vehicle control device determining a driving mode based on traffic information.
FIG. 23 shows an example of determining a driving mode based on traffic information and controlling an autonomous vehicle according to the determined driving mode, via a vehicle control device.
FIG. 24 shows an example of providing a graphical user interface (GUI) related to a traffic jam via a vehicle control device.
FIG. 25 shows an example of a vehicle control device determining a driving mode based on weather information.
FIG. 26 shows an example of determining a driving mode based on weather information and controlling an autonomous vehicle according to the determined driving mode, via a vehicle control device.
FIG. 27 shows an example of a vehicle control device determining a driving mode based on road state information.
FIG. 28 shows an example of determining a driving mode based on road state information and controlling an autonomous device according to the determined driving mode, via vehicle control device.
FIG. 29 shows an example of providing a GUI related to a dangerous road via a vehicle control device.
FIG. 30 shows an example of information about a dangerous road.
FIG. 31 shows an example of controlling an autonomous vehicle via a vehicle control device, according to a degree of danger of a dangerous road.
FIG. 32 shows an example of changing a driving mode via a vehicle control device, based on other ambient environment information.
FIG. 33 shows an example of changing a driving mode via a vehicle control device, based on other context information.
FIG. 34 shows an example of a priority order setting menu.
FIG. 35 shows an example of determining a driving mode optimized for a passenger via a vehicle control device, based on a priority order from obtained context information and ambient environment information.
FIG. 36 is a view for describing an example of a vehicle control device communicating with a mobile device.
FIG. 37 shows an example of driving information which can be set in a mobile device.
FIG. 38 shows an example of a driving profile provided by a vehicle control device.
FIG. 39 shows an example of a menu for setting a driving mode.
FIG. 40 shows an example of a menu for selecting a passenger from among a plurality of passengers in an autonomous vehicle.
FIG. 41 shows an example of a method of controlling an autonomous vehicle.

### BEST MODE

According to an aspect of an embodiment, a device for controlling an autonomous vehicle includes: an interface configured to obtain at least one of context information about a passenger of the autonomous vehicle and ambient environment information of the autonomous vehicle; and a processor configured to determine a driving mode optimized for the passenger based on the obtained at least one of the context information and the ambient environment information, and control the autonomous vehicle according to the determined driving mode.

The interface may be configured to obtain at least one of other context information and other ambient environment information. The processor may be configured to change the driving mode, based on the at least one of the other context information and the other ambient environment information.

The interface may be configured to obtain at least two pieces of different information included in the context information and the ambient environment information. The processor may be configured to determine the driving mode optimized for the passenger, based on a pre-set priority order and the obtained at least two pieces of different information.

The processor may be configured to determine the driving mode corresponding to the obtained at least one of the context information and the ambient environment information, based on a connection relationship between obtainable context information and a driving mode applicable to the autonomous vehicle.

The connection relationship may be pre-set by the passenger or determined based on learning of a driving history of the passenger.

The processor may be configured to control a driving parameter of the autonomous vehicle, according to the determined driving mode.

According to an aspect of another embodiment, a method of controlling an autonomous vehicle includes: obtaining at least one of context information about a passenger of the autonomous vehicle and ambient environment information of the autonomous vehicle; determining a driving mode optimized for the passenger, based on the obtained at least one of the context information and the ambient environment information; and controlling the autonomous vehicle according to the determined driving mode.

According to an aspect of another embodiment, a non-transitory computer-readable recording medium has recorded thereon a computer program for executing the method of controlling the autonomous vehicle.

According to an aspect of another embodiment, a method of controlling a vehicle includes: obtaining user environment information; determining a driving style, based on the user environment information; and setting a driving parameter of the vehicle according to the driving style.

### MODE OF THE INVENTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof. Also, the terms, such as "unit" or "module," should be understood as a unit that processes at least one function or operation and that may be embodied in a hardware manner, a software manner, or a combination of the hardware manner and the software manner.

It will be understood that, although the terms first, second, etc. may be used herein to describe various elements, these elements should not be limited by these terms. These terms are used to distinguish one element from another or for convenience of explanation.

Hereinafter, embodiments of the present inventive concept will be described in detail by referring to the accompanying drawings.

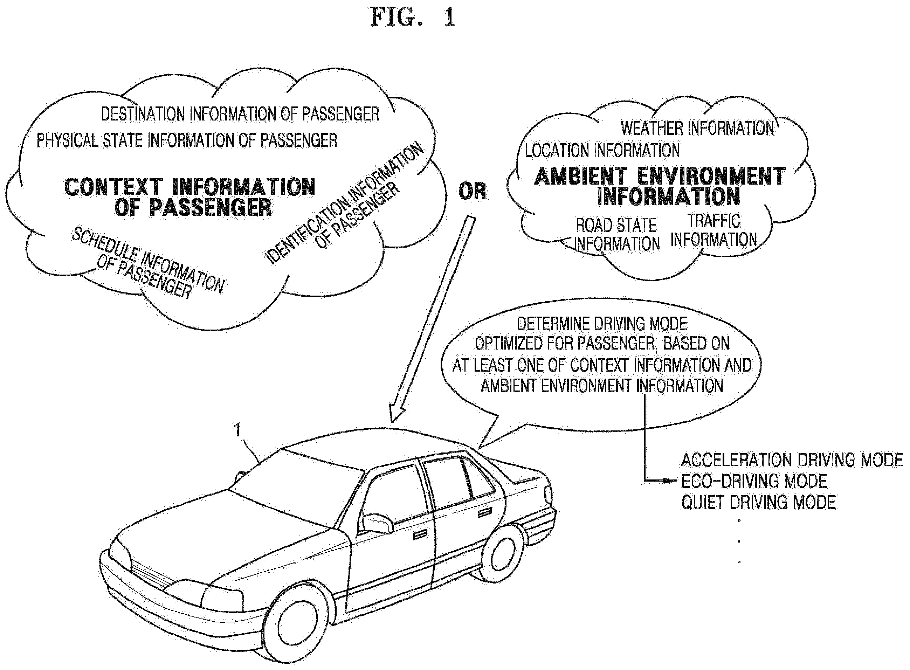

FIG. 1 shows an example of an autonomous vehicle 1.

The autonomous vehicle 1 may denote a vehicle which is capable of autonomous driving without passenger intervention. The autonomous vehicle 1 may obtain driving context information. The driving context information may denote user environment information describing which condition a user of the autonomous vehicle 1 is in. As another example, the driving context information may include information affecting driving of the autonomous vehicle 1.

The driving context information may include at least one of context information about a passenger and ambient environment information of the autonomous vehicle 1. Hereinafter, the term, simply referred to as "context information" may denote "context information about a passenger."

The context information about a passenger may denote information indicating a state of the passenger or a situation in which the passenger is. For example, the context information may include at least one of destination information of the passenger, schedule information of the passenger, physical state information of the passenger, and identification information of the passenger. As another example, the context information about a passenger may include information about the passenger at a current point in time or a future point in time.

The ambient environment information of the autonomous vehicle 1 may denote information indicating ambient environment of the autonomous vehicle 1. For example, the ambient environment information may include at least one of information of weather around the autonomous vehicle 1, information of traffic around the autonomous vehicle 1, information of a road state around the autonomous vehicle 1, information of a location of the autonomous vehicle 1, information of a current time at which the autonomous vehicle operates, information of weekdays on which the autonomous vehicle operates, and information of dates on which the autonomous vehicle operates.

The autonomous vehicle 1 may determine a driving mode optimized for the passenger, based on the obtained at least one piece of driving context information. The driving mode may indicate a driving style of the autonomous vehicle 1. For example, when the driving mode is an acceleration driving mode, the autonomous vehicle 1 may drive by enlarging an accelerative capacity, and when the driving mode is an eco-driving mode, the autonomous vehicle 1 may drive improving fuel efficiency. According to the driving mode, the autonomous vehicle 1 may determine which driving nature or characteristic to focus on while driving.

The autonomous vehicle 1 may determine a situation in which the passenger is, based on at least one of the context information about a passenger and the ambient environment information, and may determine a driving mode suitable for the determined situation, thereby determining a driving mode optimized for the passenger. That is, the autonomous vehicle 1 may determine the driving mode suitable for the situation in which the passenger is from among a plurality of driving modes. For example, when the passenger is in a situation requiring acceleration, the autonomous vehicle 1 may determine the acceleration driving mode as the driving mode optimized for the passenger. Also, as another example, when the passenger is in a situation requiring safe driving, the autonomous vehicle 1 may determine a speed limit mode as the driving mode optimized for the passenger.

The autonomous vehicle 1 may drive based on the determined driving mode, without additional passenger intervention. In detail, the autonomous vehicle 1 may drive by changing the driving mode, based on the determined driving mode. Examples of the driving parameter may include brake sensitivity, steering sensitivity, a degree of acceleration/deceleration, a maximum speed, G-force, throttle, suspension frequency, etc. That is, at least one driving parameter may be differently set based on the driving mode.

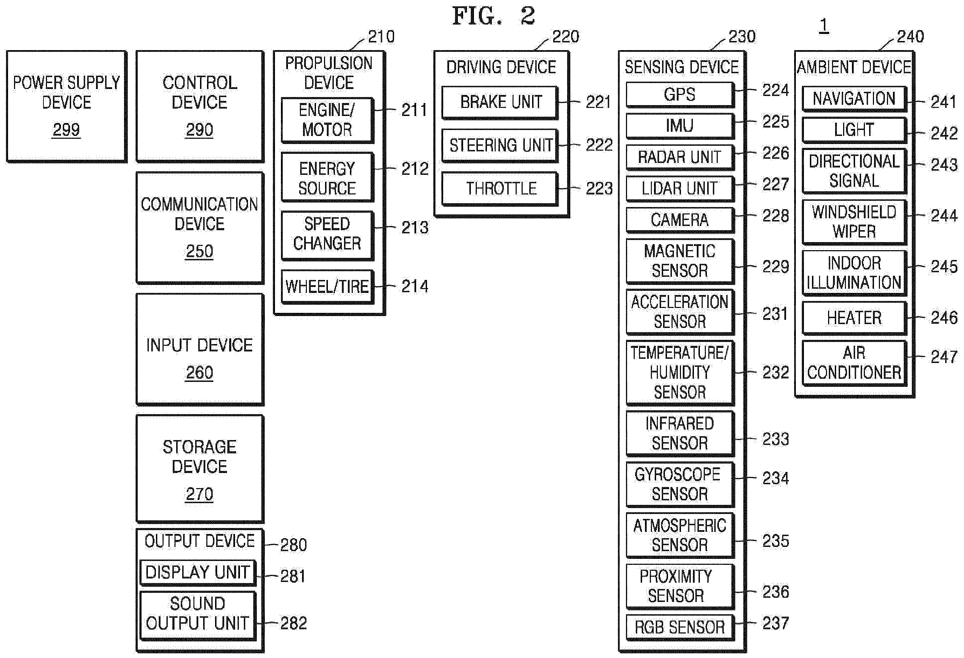

FIG. 2 is a view for describing the autonomous vehicle 1.

The autonomous vehicle 1 may include a power supply device 299, a communication device 250, an input device 260, an output device 280, a storage device 270, a driving device 220, a sensing device 230, an ambient device 240, and a control device 290. FIG. 2 illustrates only components of the autonomous vehicle 1 that are related to the present embodiment. However, it may be understood by one of ordinary skill in the art that the autonomous vehicle 1 may further include other general-purpose components than the components illustrated in FIG. 2.

A propulsion device 210 may include an engine/motor 211, an energy source 212, a speed changer 213, and a wheel/tire 214.

The engine/motor 211 may be a random combination among an internal combustion engine, an electric motor, a steam engine, and a Stirling engine. For example, when the autonomous vehicle 1 is a gas-electric hybrid car, the engine/motor 211 may be a gasoline engine and an electric motor.

The energy source 212 may be an energy source providing power to the engine/motor 211 partially or totally. That is, the engine/motor 211 may be configured to convert the energy source 212 into mechanical energy. The energy source 212 may be, for example, at least one of gasoline, diesel, propane, other compressed gas-based fuels, ethanol, a solar panel, a battery, and other electric power sources. Alternatively, the energy source 212 may be at least one of a fuel tank, a battery, a capacitor, and a flywheel. For example, the energy source 212 may provide energy to a system and a device of the autonomous vehicle 1.

The speed changer 213 may be configured to transmit mechanical power to the wheel/tire 214 from the engine/motor 211. For example, the speed changer 213 may include at least one of a gearbox, a clutch, a differential device, and a driving shaft. When the gearbox 213 includes driving shafts, the driving shafts may include one or more axles configured to be coupled to the wheel/tire 214.

The wheel/tire 214 may have various forms, such as a unicycle, a bicycle/auto-bicycle, a tricycle, or a four-wheeled vehicle, such as an automobile/truck. For example, other forms of the wheel/tire 214 may also be possible, such as a form including six or more wheels. The wheel/tire 214 may include at least one wheel fixedly coupled to the gearbox 213, and at least one tire coupled to a rim of the wheel which may contact a driving surface.

The driving device 220 may include a brake unit 221, a steering unit 222, and a throttle 223.

The steering unit 222 may be a combination of mechanisms configured to adjust a direction of the autonomous vehicle 1.

The throttle 223 may be a combination of mechanisms configured to control a speed of the autonomous vehicle 1 by controlling an operating speed of the engine/motor 211. Also, the throttle 223 may adjust an amount of mixture gas of fuel air flowing into the engine/motor 211 by adjusting an open amount of the throttle 223, and control power and propulsion by adjusting the open amount of the throttle 223.

The brake unit 221 may be a combination of mechanisms configured to decelerate the autonomous vehicle 1. For example, the brake unit 221 may use friction to reduce a speed of the wheel/tire 214.

The sensing device 230 may include a plurality of sensors configured to sense information about an environment in which the autonomous vehicle 1 is. Also, the sensing device 230 may include one or more actuators configured to correct locations and/or orientations of the sensors. For example, the sensing device 230 may include a global positioning system (GPS) 224, an inertial measurement unit (IMU) 225, a RADAR unit 226, a LIDAR unit 227, and a camera 228. Also, the sensing device 230 may include at least one of a magnetic sensor 229, an acceleration sensor 231, a temperature/humidity sensor 232, an infrared sensor 233, a gyroscope sensor 234, an atmospheric sensor 235, a proximity sensor 236, and an illuminance (RGB) sensor 237. However, the sensing device 230 is not limited thereto. The function of each sensor may be instantly inferred by one of ordinary skill in the art from its name, and thus, its detailed description will be omitted.

The GPS 224 may be a sensor configured to estimate a geographical location of the autonomous vehicle 1. That is, the GPS 224 may include a transceiver configured to estimate the location of the autonomous vehicle 1 on the earth.

The IMU 225 may be a combination of sensors configured to detect location and orientation changes of the autonomous vehicle 1, based on inertial acceleration. For example, the combination of sensors may include accelerometers and gyroscopes.

The RADAR unit 226 may be a sensor configured to detect objects in an environment in which the autonomous vehicle 1 is, by using a wireless signal. Also, the RADAR unit 226 may be configured to detect a speed and/or a direction of the objects.

The LIDAR unit 227 may be a sensor configured to detect objects in an environment in which the autonomous vehicle 1 is, by using a laser beam. In more detail, the LIDAR unit 227 may include a laser light source and/or a laser scanner configured to emit a laser beam, and a detector configured to detect reflection of the laser beam. The LIDAR unit 227 may be configured to operate in a coherent (for example, using heterodyne detection) or incoherent detection mode.

The camera 228 may include a still camera or a video camera configured to record three-dimensional images in the autonomous vehicle 1. For example, the camera 228 may include a plurality of cameras, which may be arranged at a plurality of locations inside or outside the autonomous vehicle 1.

The ambient device 240 may include a navigation 241, a light 242, a directional signal 243, a windshield wiper 244, indoor illumination 245, a heater 246, and an air conditioner 247.

The navigation 241 may be a system configured to determine a drive path of the autonomous vehicle 1. The navigation 241 may be configured to dynamically renew the driving path while the autonomous vehicle 1 is driving. For example, the navigation 241 may use data from the GPS 224 and maps to determine the driving path of the autonomous vehicle 1.

The storage device 270 may include a magnetic disc drive, an optical disc drive, and a flash memory. Alternatively, the storage device 270 may be a portable USB data storage device. The storage device 270 may store system software for executing examples related to the present application. The system software for executing the examples related to the present application may be stored in a portable storage medium.

The communication device 250 may include at least one antenna for wirelessly communicating with other devices. For example, the communication device 250 may be used to wirelessly communicate with a cellular network or other protocols and systems via Wi-Fi or Bluetooth. The communication device 250 controlled by the control device 290 may transmit and receive wireless signals. For example, the control device 290 may execute a program included in the storage device 270 so that the communication device 250 may transmit and receive wireless signals to and from a cellular network.

The input device 260 denotes a device for inputting data for controlling the autonomous vehicle 1. For example, the input device 260 may include a key pad, a dome switch, a touch pad (e.g., a capacitive overlay type, a resistive overlay type, an infrared beam type, a surface acoustic wave type, an integral strain gauge type, a piezoelectric type, or the like), a jog wheel, a jog switch, etc., but is not limited thereto. Also, the input device 260 may include a microphone, and may be configured to receive audio (for example, a voice instruction) from a passenger of the autonomous vehicle 1.

The output device 280 may output an audio signal or a video signal, and may include a display unit 281 and a sound output unit 282.

The display unit 281 may include at least one of a liquid crystal display, a thin film transistor-liquid crystal display, an organic light-emitting diode display, a flexible display, a three-dimensional (3D) display, and an electrophoretic display. Also, according to a realized form of the output device 280, the output device 280 may include at least two display units 281.

The sound output unit 282 may output audio data received from the communication device 250 or stored in the storage device 270. Also, the sound output unit 282 may include a speaker, a buzzer, etc.

The input device 260 and the output device 280 may include a network interface and may be realized as a touch screen.

The control device 290 may control general operations of the autonomous vehicle 1, in general. For example, the control device 290 may execute programs stored in the storage device 270 to generally control the propulsion device 210, the driving device 220, the sensing device 230, the ambient device 240, the communication device 250, the input device 260, the storage device 270, the output device 280, and the power supply device 299.

The power supply device 299 may be configured to provide power to some or all components of the autonomous vehicle 1. For example, the power supply device 299 may include a re-chargeable lithium ion or lead-acid battery.

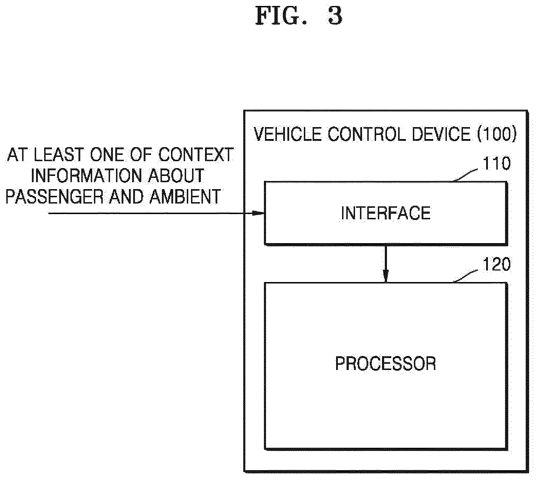

FIG. 3 is a view for describing a vehicle control device 100 for controlling the autonomous vehicle 1.

The vehicle control device 100 may be included in the autonomous vehicle 1, and may include at least one of the control device 290, the communication device 250, the input device 260, the output device 280, and the sensing device 230 of FIG. 2, and thus, the same aspect will not be repeatedly described.

The vehicle control device 100 may include an interface 110 and a processor 120. FIG. 3 illustrates only components of the autonomous vehicle 1 that are related to the present embodiment. However, it may be understood by one of ordinary skill in the art that the autonomous vehicle 1 may further include other general-purpose components than the components illustrated in FIG. 3.

The interface 110 may obtain at least one of context information about a passenger and ambient environment information of the autonomous vehicle 1. For example, the interface 110 may obtain the at least one of context information about a passenger and ambient environment information of the autonomous vehicle 1 from an external device. For example, the communication device 250 may obtain the at least one of context information about a passenger and ambient environment information of the autonomous vehicle 1 from the external device, and transmit the obtained information to the interface 110. As another example, the interface 110 may obtain the at least one of context information about a passenger and ambient environment information of the autonomous vehicle 1, stored in the storage device 270. As another example, the interface 110 may obtain the at least one of context information about a passenger and ambient environment information of the autonomous vehicle 1 from the sensing device 230. For example, the sensing device 230 may obtain physical state information of the passenger and transmit the obtained information to the interface 110. As another example, the interface 110 may obtain the at least one of context information about a passenger and ambient environment information of the autonomous vehicle 1 from the input device 260. For example, the passenger may input the context information about the passenger and the ambient environment information of the autonomous vehicle 1 via the input device 260, and the input device 260 may transmit the information input by the user to the interface 110.

The processor 120 may determine a driving mode optimized for the passenger, based on the obtained at least one of the context information and the ambient environment information. That is, the processor 120 may determine a situation in which the passenger is without passenger intervention, based on at least one of the context information about the passenger and the ambient environment information, and determine the driving mode suitable for the determined situation.

The driving mode may include, for example, an acceleration driving mode for increasing an acceleration performance of the autonomous vehicle 1, an eco-driving mode for increasing fuel efficiency of the autonomous vehicle 1, a quiet driving mode for minimizing vibration and acceleration of the autonomous vehicle 1, a speed limit mode for driving at a speed that is equal to or lower than a predetermined speed, a ground-type mode suitable for a ground type on which the autonomous vehicle 1 drives, and an urgency driving mode for an emergency situation of a passenger. The names of the driving modes described above are examples, and thus, are not limited thereto. Also, each of the driving modes described above may be applied to manual driving under control of a passenger, and may be applied to autonomous driving without control of the passenger. For example, the autonomous vehicle 1 may drive in a pre-determined eco-driving mode when the passenger actually drives the autonomous vehicle 1, and the autonomous vehicle 1 may drive in a pre-determined acceleration driving mode when the passenger does not actually drive the autonomous vehicle 1.

The processor 120 may control the autonomous vehicle 1 according to a determined driving mode. For example, the processor 120 may adjust a driving parameter according to the determined driving mode. Also, the processor 120 may control the propulsion device 210 or the ambient device 240 of the autonomous vehicle 1 according to the determined driving mode.

When the driving mode is the acceleration driving mode, the processor 120 may adjust a driving parameter for increasing an accelerative performance of the autonomous vehicle 1. For example, the processor 120 may increase an open amount of a throttle, a suspension frequency, and a suspension stiffness. Also, the processor 120 may make fast driving possible by making possible a quick acceleration response by using a large torque output.

When the driving mode is the eco-driving mode, the processor 120 may change a driving parameter for increasing fuel efficiency of the autonomous vehicle 1. For example, the processor 120 may set an open amount of a throttle and an acceleration of the autonomous vehicle 1, as minimum values. Also, the processor 120 may increase fuel efficiency by making the autonomous vehicle 1 maintain low revolutions per minute (RPM) via a larger change of speed.

When the driving mode is the quiet driving mode, the processor 120 may adjust a driving parameter for minimizing vibration and acceleration of the autonomous vehicle 1. For example, the processor 120 may reduce suspension stiffness and suspension frequency. Also, the processor 120 may control a damped ratio of a shock absorber for suppressing vibration applied to a tire or vibration on a suspension spring, which is generated due to reaction to a road surface.

When the driving mode is the speed limit mode, the processor 120 may restrict a speed at which the autonomous vehicle 1 may drive to a predetermined value. For example, the processor 120 may restrict a maximum speed at which the autonomous vehicle 1 may drive to 60 km/h.

When the driving mode is the urgency driving mode, the processor 120 may control the autonomous vehicle 1 to drive to a certain destination in the shortest period of time. For example, the processor 120 may control the autonomous vehicle 1 to drive from a current location to a nearest hospital within the shortest period of time.

When the driving mode is the ground-type mode, the processor 120 may adjust a driving parameter of the autonomous vehicle 1 according to a ground state on which the autonomous vehicle 1 drives. For example, when the ground on which the autonomous vehicle 1 drives is a mountain covered with gravel/sand, the processor 120 may increase suspension, and convert the autonomous vehicle 1 into a four-wheel-drive vehicle to distribute the same proportion of driving force to the front wheels and rear wheels.

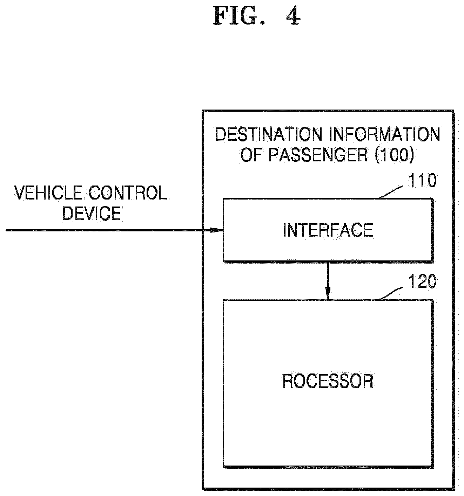

FIG. 4 illustrates the vehicle control device 100 determining a driving mode based on destination information of a passenger.

The interface 110 may obtain destination information of the passenger as the context information about the passenger. For example, the interface 110 may receive the destination information directly from the passenger. For example, the interface 110 may obtain the destination information of the passenger via a voice signal of the passenger indicating the destination information. As another example, the interface 110 may obtain the destination information from a device of the passenger, via the communication device 250.

The processor 120 may determine the driving mode optimized for the passenger based on the obtained destination information of the passenger. For example, the processor 120 may determine a situation of the passenger based on the destination information of the passenger and determine the driving mode suitable for the determined situation. When the destination information of the passenger is "a company", the processor 120 may determine that the passenger is in "an urgent situation in which a traffic jam is "possible", since the current time is commuting hours, and determine the driving mode optimized for the passenger as an acceleration driving mode. For example, the current time or whether a traffic jam is imminent may be obtained via a device inside or outside a vehicle, a server, etc., via the interface 110. However, even when other information, such as the current time or whether the traffic jam is imminent, is not directly input via the interface 110, the processor 120 may infer or suppose the other information based on the destination information, according to another embodiment. For example, when the company is input as the destination information, the processor 120 may determine that the passenger rides in the autonomous vehicle 1 to go to a company, and determine the driving mode as the acceleration driving mode by assuming that the current time is commuting hours.

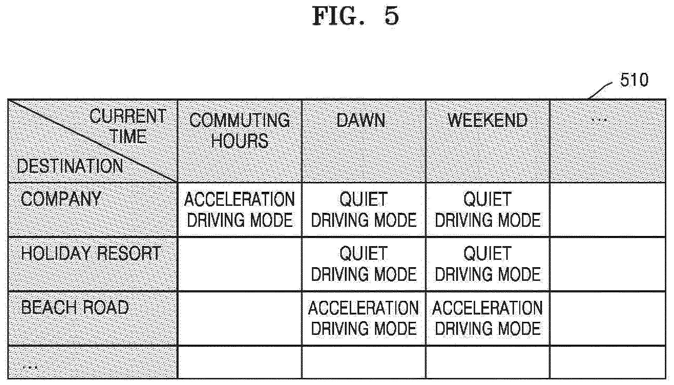

Also, the processor 120 may determine the driving mode corresponding to the destination information of the passenger based on a connection relationship between the destination information of the passenger and the driving mode. A more detailed example of the connection relationship between the destination information of the passenger and the driving mode will be described by referring to FIG. 5.

The processor 120 may control the autonomous vehicle 1 according to the determined driving mode.

FIG. 5 illustrates an example of the connection relationship between the destination information of the passenger and the driving mode.

For example, a table 510 illustrated in FIG. 5 illustrates the connection relationship between the destination information of the passenger and the driving mode.

When the destination information of the passenger is obtained, the processor 120 may determine the driving mode optimized for the passenger, based on the table 510. For example, when the destination information of the passenger is "a holiday resort", the processor 120 may determine the driving mode optimized for the passenger as a quiet driving mode, by referring to the table 510, since the current time is the "weekend." Also, as another example, when the destination information of the passenger is "a beach road", the processor 120 may determine the driving mode optimized for the passenger as an acceleration driving mode, by referring to the table 510, since the current time is "dawn."

The connection relationship of the table 510 may be pre-set by the passenger. For example, the passenger may pre-input information for setting the table 510 via the input device 260 of the autonomous vehicle 1. As another example, the passenger may pre-set the table 510 on a mobile device. Next, the interface 110 may receive the table 510 from the mobile device, and the processor 120 may determine the driving mode corresponding to the destination of the passenger by using the received table 510.

Also, the connection relationship of the table 510 may be determined by learning a past driving history of the passenger. For example, the processor 120 may determine the connection relationship of the table 510 based on the past driving history of the passenger. When the passenger directly determines the driving mode of the autonomous vehicle 1, the processor 120 may determine and update the connection relationship of the table 510 based on the destination of the passenger, the driving time, and the determined driving mode.

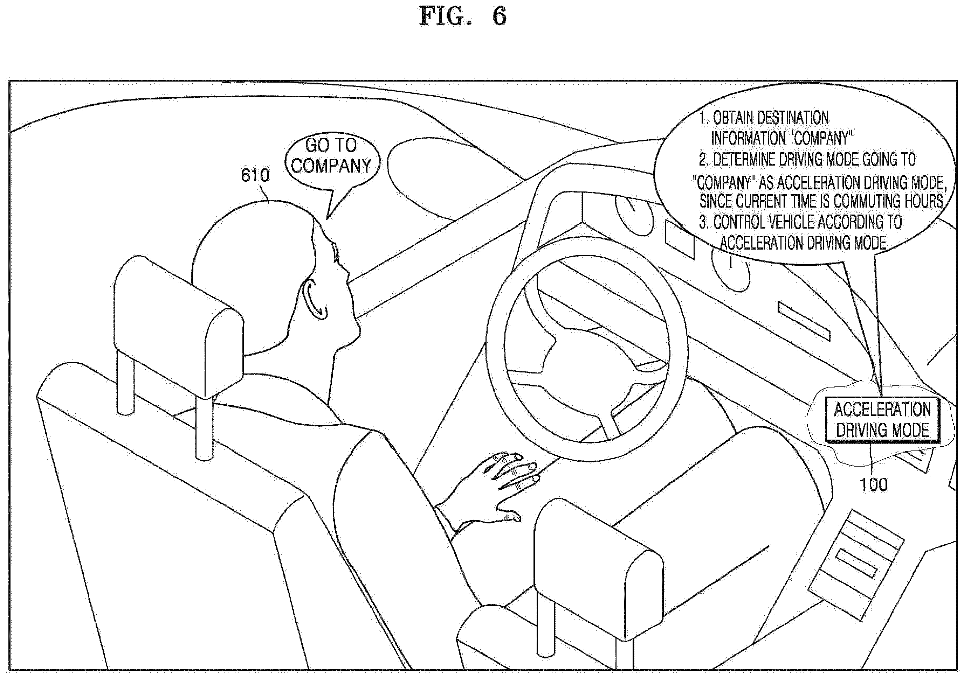

FIG. 6 shows an example of determining a driving mode via the vehicle control device 100, based on destination information of a passenger 610.

The passenger 610 may say "company" as the destination information in the autonomous vehicle 1. Next, the vehicle control device 100 may sense a voice signal of the passenger 610 and obtain the destination information as the "company."

The vehicle control device 100 may determine the driving mode optimized for the passenger 610 as an acceleration driving mode, based on the destination information, the "company", since the current time is commuting hours. That is, the vehicle control device 100 may determine that the situation in which the passenger 610 is is "an urgent situation in which a traffic jam is possible", since the destination information is the "company" and the current time is commuting hours, and determine the driving mode optimized for the passenger 610 as the acceleration driving mode.

Thus, the vehicle control device 100 may control the autonomous vehicle 1 based on the determined acceleration driving mode.

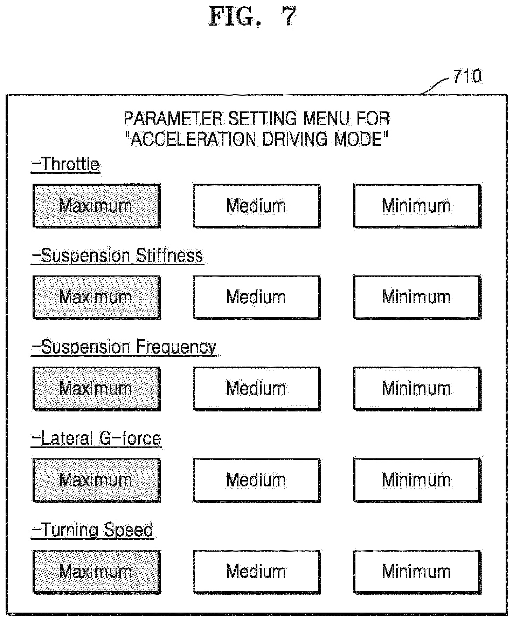

FIG. 7 shows an example of controlling the autonomous vehicle 1 via the vehicle control device 100, using the acceleration driving mode.

The vehicle control device 100 may control the autonomous vehicle 1 based on a parameter setting menu 710 for the acceleration driving mode. For example, the vehicle control device 100 may provide the parameter setting menu 710 to the passenger in advance, and receive parameter values of the menu 710 from the passenger. That is, as illustrated in FIG. 7, the passenger may set an open amount of a throttle, a suspension stiffness, a suspension frequency, a lateral G-force, and a turning speed, as the maximum values. For example, the maximum value of the open amount of a throttle may denote a value indicating 70% or more of a wide-open state, the maximum value of the suspension frequency may denote a value between 1.25 Hz and 2.5 Hz, and the maximum value of the lateral G-force may denote a value between 0.7G and 0.9G. However, the maximum value of the open amount of a throttle, the maximum value of the suspension frequency, and the maximum value of the lateral G-force are not limited to the described numbers.

As another example, the vehicle control device 100 may receive the menu 710 from a mobile device of the passenger, and control the autonomous vehicle 1 according to the received menu 710. The passenger may input a parameter value for the acceleration driving mode via the menu 710 of the mobile device of the passenger.

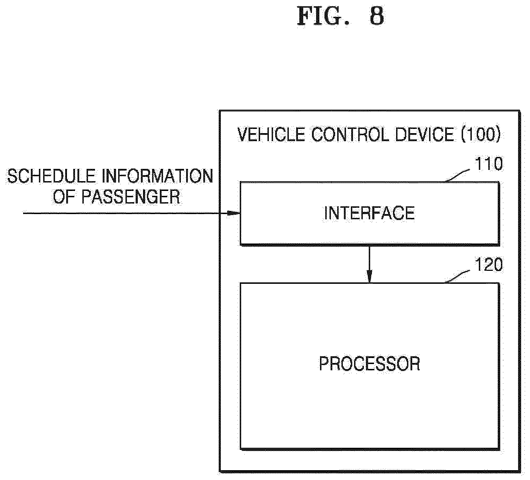

FIG. 8 shows a vehicle control device determining a driving mode based on schedule information of a passenger.

The interface 110 may obtain schedule information of the passenger as the context information about the passenger. For example, the interface 110 may obtain the schedule information of the passenger stored in a mobile device of the passenger via the communication device 250. In detail, the interface 110 may obtain information about a destination of the passenger and a target arrival time from among the schedule information of the passenger.

The processor 120 may determine the driving mode optimized for the passenger based on the obtained schedule information of the passenger. For example, the processor 120 may determine the driving mode optimized for the passenger, based on the information about the destination of the passenger and the target arrival time from among the schedule information of the passenger.

In detail, the processor 120 may determine an expected arrival time at which the autonomous vehicle 1 will arrive at the destination of the passenger, based on the information about the destination of the passenger. Next, the processor 120 may determine how much time the passenger has left to the destination, by comparing the target arrival time of the passenger with the expected arrival time. That is, when a difference between the target arrival time and the expected arrival time is less than a predetermined time, or when the expected arrival time is after the target arrival time, the processor 120 may determine that the passenger has insufficient time and determine an acceleration driving mode as the driving mode optimized for the passenger. Also, when the expected arrival time is before the target arrival time, and the difference between the target arrival time and the expected arrival time is greater than a predetermined time, the processor 120 may determine that the passenger has enough time and determine an eco-driving mode as the driving mode optimized for the passenger.

The processor 120 may control the autonomous vehicle 1 according to the determined driving mode.

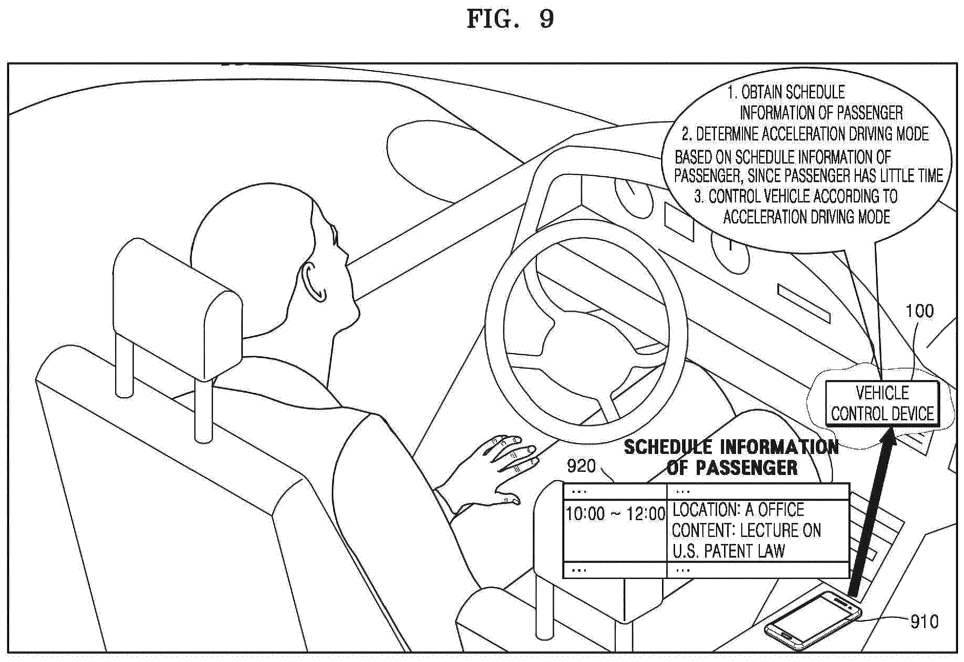

FIG. 9 shows an example of determining a driving mode via the vehicle control device 100, based on schedule information 920 of a passenger.

The vehicle control device 100 may receive schedule information 920 stored in a mobile device 910 of the passenger from the mobile device 910. That is, based on communication between the vehicle control device 100 and the mobile device 910, the vehicle control device 100 may receive the schedule information 920 of the passenger from the mobile device 910.

The vehicle control device 100 may determine the driving mode optimized for the passenger, based on the received schedule information 920 of the passenger. In more detail, the vehicle control device 100 may obtain information about an "A office", which is the destination of the passenger, and information about "10:00"," which is the target arrival time, via the schedule information 920 of the passenger. Next, the vehicle control device 100 may determine an expected arrival time at which the autonomous vehicle 1 will arrive at the "A office", the destination of the passenger, based on a current location and a current time. For example, the vehicle control device 100 may determine the expected arrival time at which the autonomous vehicle 1 will arrive at the "A office", the destination of the passenger, by using the navigation 241 of the autonomous vehicle 1. Next, the vehicle control device 100 may determine how much time the passenger has left to the destination by comparing the determined expected arrival time and the target arrival time, "10:00", and determine the driving mode optimized for the passenger based on the determination.

For example, when the determined expected arrival time is 09:50, a difference between the expected arrival time and the target arrival time is within 20 minutes, a pre-set time, and the vehicle control device 100 may determine that the passenger has little time, and determine the driving mode optimized for the passenger as an acceleration driving mode. Thus, the vehicle control device 100 may control the autonomous vehicle 1 according to the determined acceleration driving mode. As another example, when the determined expected arrival time is 09:20, the difference between the expected arrival time and the target arrival time, "10:00", is equal to or more than 20 minutes, which is the pre-set time, and the vehicle control device 100 may determine that the passenger has sufficient time, and determine the driving mode optimized for the passenger as an eco-driving mode.

Thus, the vehicle control device 100 may control the autonomous vehicle 1 according to the determined eco-driving mode.

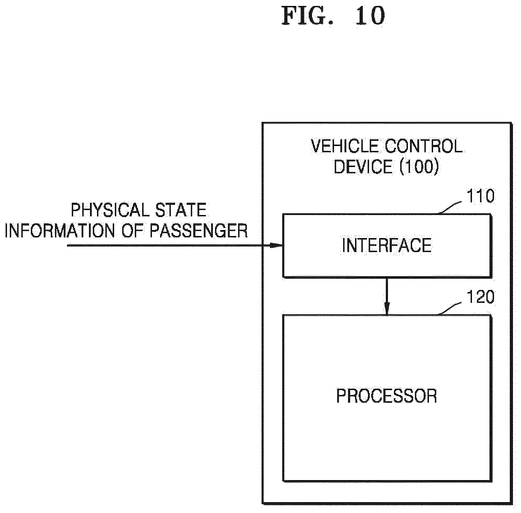

FIG. 10 shows a vehicle control device determining a driving mode based on physical state information of a passenger.

The interface 110 may obtain physical state information of the passenger as the context information about the passenger. The physical state information of the passenger may include not only information about a heart rate, blood pressure, breathing, blood alcohol concentration, a body temperature, blood sugar, etc. of the passenger, but also information about whether the passenger is in a sleeping state, a concentration state, or a health-related emergency state. For example, the sensing device 230 may sense physical state information of the passenger and transmit the sensed information to the interface 110. Also, as another example, the interface 110 may obtain the physical state information of the passenger from the communication device 250. That is, the communication device 250 may obtain the physical state information of the passenger from an external device which may sense the physical state of the passenger and transmit the obtained information to the interface 110.

The processor 120 may determine the driving mode optimized for the passenger based on the obtained physical state information of the passenger. For example, when the physical state information of the passenger is information indicating a sleeping state of the passenger, the processor 120 may determine the driving mode optimized for the passenger as a quiet driving mode in order to minimize elements disturbing a sleeping passenger. As another example, when the physical state information of the passenger is information indicating a concentration state of the passenger, the processor 120 may determine the driving mode optimized for the passenger as the quiet driving mode in order to remove elements interrupting the concentration of the passenger. An example of the concentration state of the passenger may be a case where the passenger has been watching the tablet PC for a time equal to or higher than a pre-set time. As another example, when the physical state information of the passenger is information indicating a health-related emergency state of the passenger, the processor 120 may determine the driving mode optimized for the passenger as an urgency driving mode.

The processor 120 may control the autonomous vehicle 1 according to the determined driving mode.

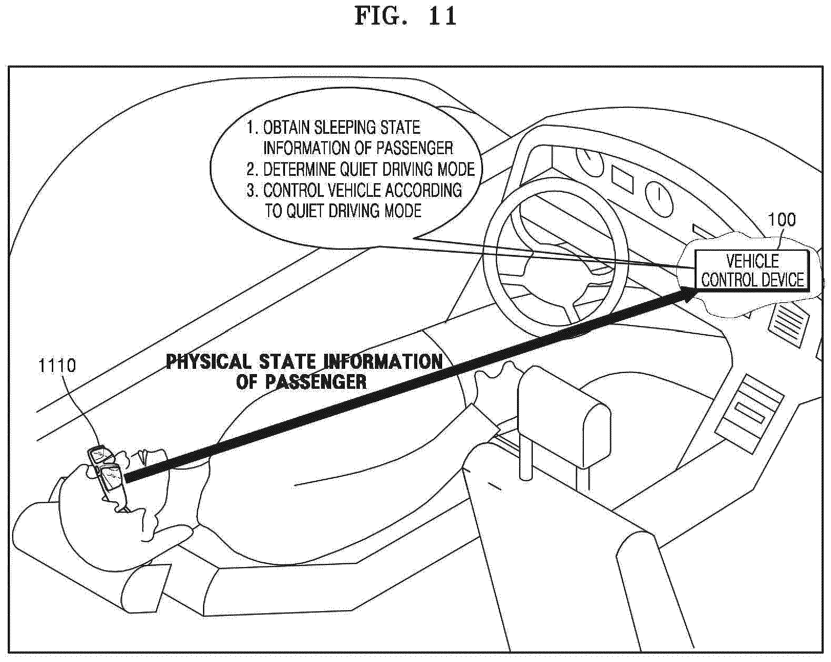

FIG. 11 shows an example of determining a driving mode based on sleeping state information of a passenger and controlling an autonomous vehicle based on the determined driving mode, via the vehicle control device 100.

A wearable device 1110 may determine whether the passenger is in a sleeping state or not. For example, the wearable device 1110 may photograph the eyes of the passenger via a camera to determine whether the passenger is in the sleeping state. In detail, the wearable device 1110 may determine that the passenger is in the sleeping state, when the eyes of the passenger are closed by a proportion that is equal to or higher than a reference proportion with respect to the normal state, or when the time during which the eyes of the passenger are closed is equal to or higher than a pre-determined time. Next, the wearable device 1110 may transmit the sleeping state information of the passenger to the vehicle control device 100.

The vehicle control device 100 may obtain the sleeping state information of the passenger from the wearable device 1110 as the physical state information of the passenger. The vehicle control device 100 may determine the driving mode optimized for the passenger based on the sleeping state information of the passenger. That is, since the passenger is in the sleeping state, the vehicle control device 100 may determine the driving mode optimized for the passenger as the quiet driving mode to minimize elements disturbing a sleeping passenger.

Thus, the vehicle control device 100 may control the autonomous vehicle 1 according to the determined quiet driving mode. Also, when the vehicle control device 100 controls the autonomous vehicle 1 based on the quiet driving mode, the vehicle control device 100 may also control the ambient device 240 of the autonomous vehicle 1. For example, the vehicle control device 100 may adjust the indoor illuminance 245 to a pre-set brightness.

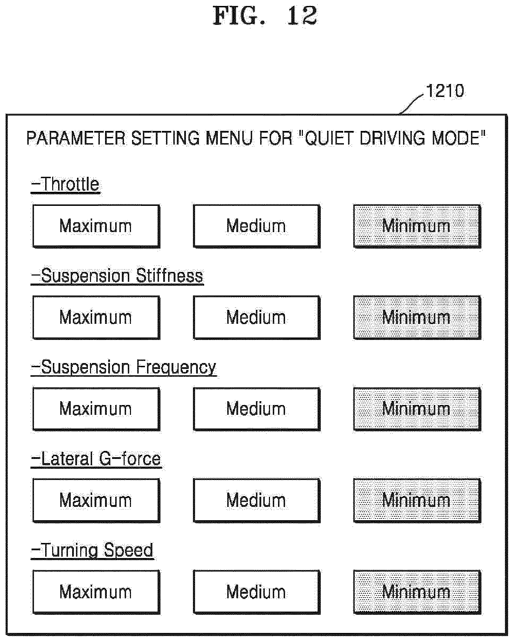

FIG. 12 shows an example of controlling the autonomous vehicle 1 via the vehicle control device 100, using a quiet driving mode.

The vehicle control device 100 may control the autonomous vehicle 1 based on a parameter setting menu 1210 for the quiet driving mode. For example, the vehicle control device 100 may receive parameter values of the parameter setting menu 1210 from the passenger, by providing the menu 1210 to the passenger in advance. That is, as illustrated in FIG. 12, the passenger may set an open amount of a throttle, a suspension stiffness, a suspension frequency, a lateral G-force, and a turning speed as the minimum values. For example, the minimum value of the open amount of a throttle may denote a value indicating less than 30% of a wide-open state, the minimum value of the suspension frequency may denote a value between 1.0 Hz and 1.2 Hz, and the minimum value of the lateral G-force may denote a value between 0.3G and 0.5G.

As another example, the vehicle control device 100 may receive the menu 1210 from a mobile device of the passenger, and control the autonomous vehicle 1 according to the received menu 1210. The passenger may input parameter values for the quiet driving mode via the menu 1210 of the mobile device of the passenger.

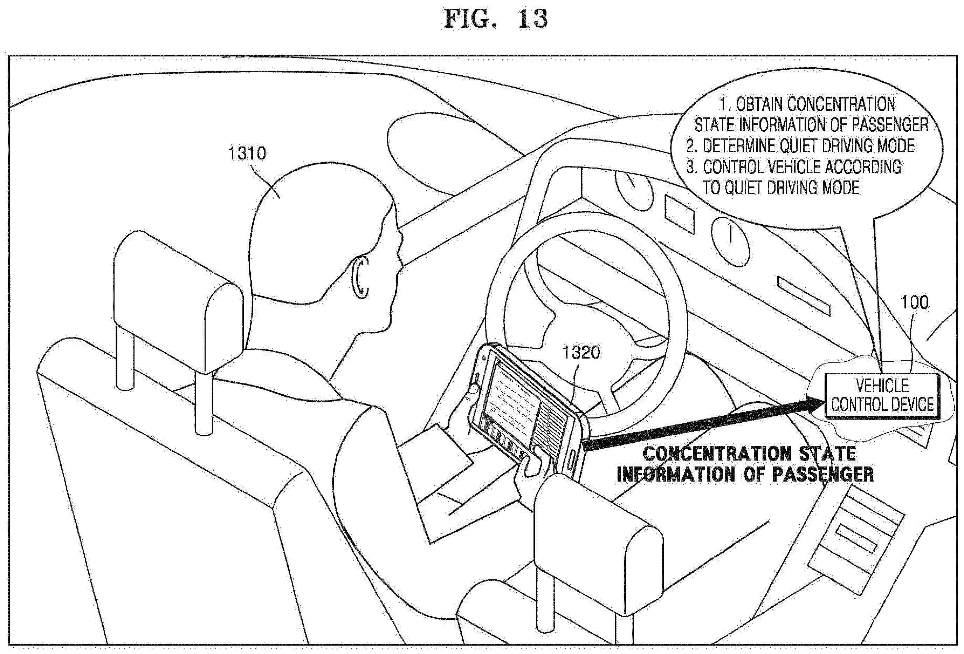

FIG. 13 shows an example of determining a driving mode based on concentration state information of a passenger 1310 and controlling the autonomous vehicle 1 based on the determined driving mode, via the vehicle control device 100.

The passenger 1310 may perform a certain work via a tablet PC 1320. That is, the passenger 1310 may concentrate on the tablet PC 1320. The tablet PC 1320 may photograph the eyes of the passenger 1310 via a camera and determine whether the passenger 1310 is in a concentration state by photographing the eyes of the passenger 1310. For example, when the passenger 1310 has been watching the tablet PC 1320 for a time equal to or more than a predetermined time, the tablet PC 1320 may determine that the passenger 1310 is in the concentration state. Next, the tablet PC 1320 may transmit the concentration state information of the passenger 1310 to the vehicle control device 100.

The vehicle control device 100 may obtain the concentration state of the passenger from the tablet PC 1320 as the physical state information of the passenger. The vehicle control device 100 may determine a driving mode optimized for the passenger 1310 based on the concentration state information of the passenger 1310. That is, the vehicle control device 100 may determine the driving mode optimized for the passenger 1310 as the quiet driving mode to minimize elements interrupting the concentration of the passenger 1310, since the passenger 1310 is concentrated on a certain work.

Thus, the vehicle control device 100 may control the autonomous vehicle 1 according to the determined quiet driving mode.

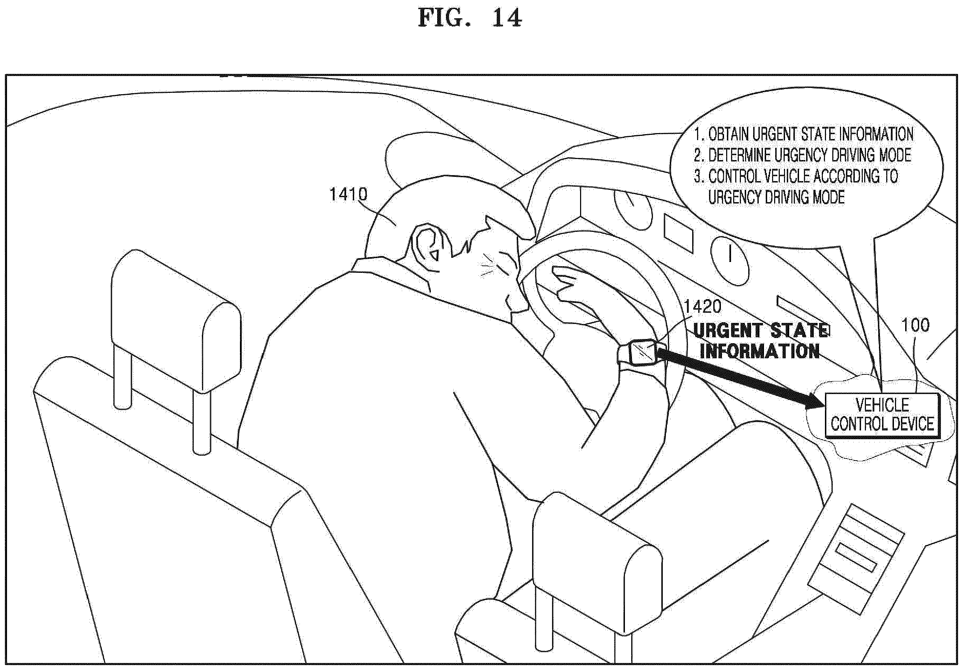

FIG. 14 shows an example of determining a driving mode via the vehicle control device 100, based on urgent state information of a passenger.

A wearable device 1420 may periodically detect a physical state of a passenger 1410. For example, the wearable device 1420 may periodically detect a heart rate, blood pressure, breathing, body temperature, etc. of the passenger 1410 via a sensor. Thus, the wearable device 1420 may determine whether the passenger 1410 is in an urgent state by periodically detecting the physical state of the passenger 1410. For example, the wearable device 1420 may determine whether the passenger 1410 has a heart attack by detecting a hear rate of the passenger 1410. Also, the wearable device 1420 may determine whether the passenger 1410 has a high body temperature by detecting a body temperature of the passenger 1410. Also, as another example, when the passenger 1410 has a certain disease, the wearable device 1420 may determine whether the disease of the passenger 1410 worsens. When the passenger 1410 is in an urgent state, the wearable device 1420 may transmit the urgent state information of the passenger 1410 to the vehicle control device 100.

The vehicle control device 100 may obtain the urgent state information of the passenger 1410 from the wearable device 1420 as the physical state information of the passenger 1410. The vehicle control device 100 may determine a driving mode optimized for the passenger 1410 based on the urgent state information of the passenger 1410. That is, the vehicle control device 100 may determine the driving mode optimized for the passenger 1410 as an urgency driving mode for health recovery of the passenger 1410 since the health of the passenger 1410 is in an urgent state.

Thus, the vehicle control device 100 may control the autonomous vehicle 1 according to the determined urgency driving mode. For example, the vehicle control device 100 may control the autonomous vehicle 1 to autonomously drive to a nearest hospital from a current location within a shortest period of time as possible.

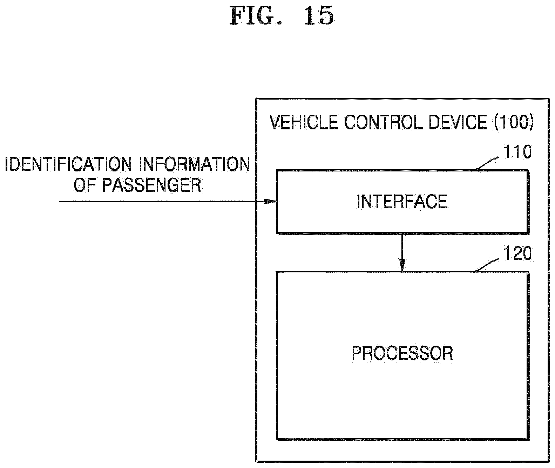

FIG. 15 shows an example of a vehicle control device determining a driving mode based on identification information of a passenger.

The interface 110 may obtain the identification information of the passenger as the context information about the passenger. For example, the identification information of the passenger may indicate whether the passenger is a "child" or an "elder" For example, the interface 110 may obtain the identification information of the passenger from a device which may identify the passenger. Here, the device which may identify the passenger may determine whether the passenger is a "child", depending on whether a child rides in a child car seat. As another example, the device which may identify the passenger may determine whether the passenger is a child or an elder by identifying a voice of the passenger.

The processor 120 may determine a driving mode optimized for the passenger, based on the obtained identification information of the passenger. For example, when the identification information of the passenger is information indicating an elder or a child, the processor 120 may determine the driving mode optimized for the passenger as a quiet driving mode to protect the elder or the child.

The processor 120 may control the autonomous vehicle 1 according to the determined driving mode.

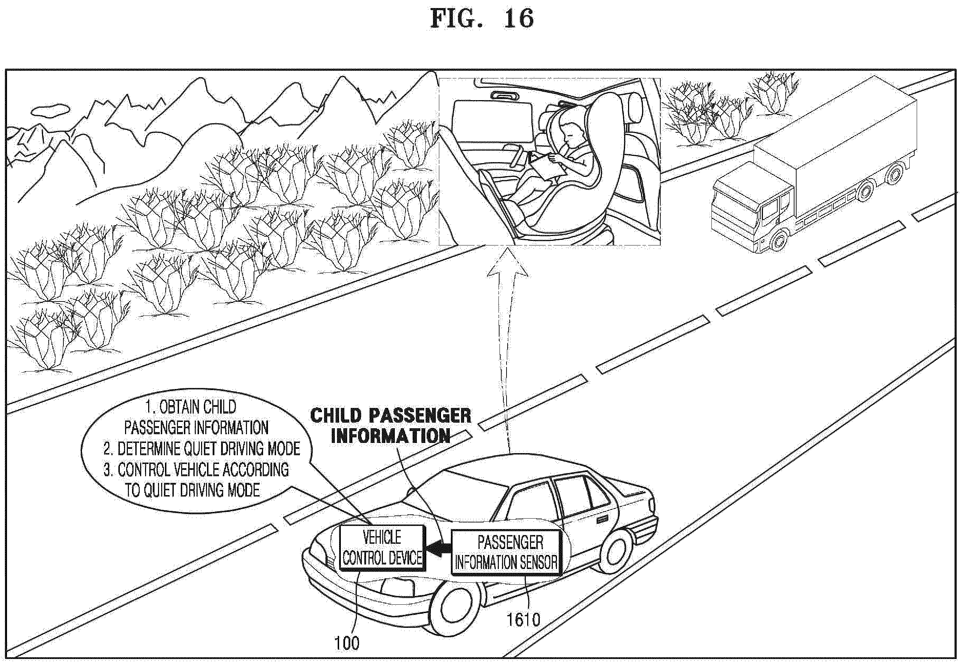

FIG. 16 shows an example of determining a driving mode via the vehicle control device 100, based on identification information of a passenger.

A passenger information detector 1610 may obtain child passenger information when a child rides in a child car seat. Thereafter, the vehicle control device 100 may obtain the child passenger information from the passenger information detector 1610.

The vehicle control device 100 may determine a driving mode optimized for the passenger as a quiet driving mode, based on the obtained child passenger information. That is, the vehicle control device 100 may determine the driving mode optimized for the passenger as the quiet driving mode to protect the child.

Thus, the vehicle control device 100 may control the autonomous vehicle 1 according to the determined quiet driving mode.

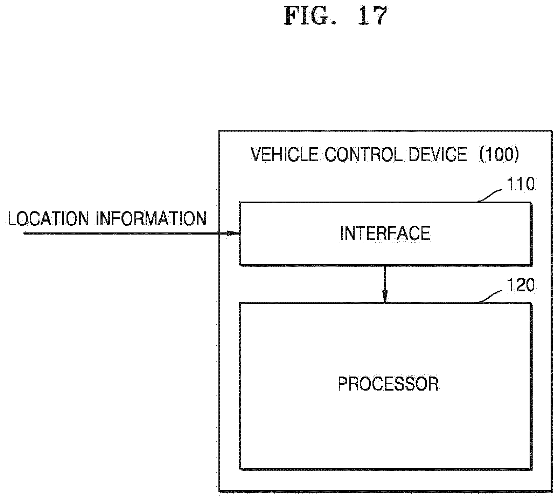

FIG. 17 shows an example of a vehicle control device determining a driving mode based on location information of the autonomous vehicle 1.

The interface 110 may obtain the location information of the autonomous vehicle 1 as ambient environment information of the autonomous vehicle 1. For example, the interface 110 may obtain the location information of the autonomous vehicle 1 from the GPS 224 of the autonomous vehicle 1. As another example, the interface 110 may obtain the location information of the autonomous vehicle 1 from a GPS of a mobile device of the passenger.

The processor 120 may determine a driving mode optimized for the passenger based on the obtained location information of the autonomous vehicle 1. For example, when the location information of the autonomous vehicle 1 indicates an "expressway", the processor 120 may determine the driving mode optimized for the passenger as an acceleration driving mode. As another example, when the location information of the autonomous vehicle 1 indicates a "downtown area", the processor 120 may determine the driving mode optimized for the passenger as an eco-driving mode. As another example, when the location information of the autonomous vehicle 1 indicates "around a landmark", the processor 120 may determine the driving mode optimized for the passenger as a speed limit mode.

The processor 120 may control the autonomous vehicle 1 according to the determined driving mode.

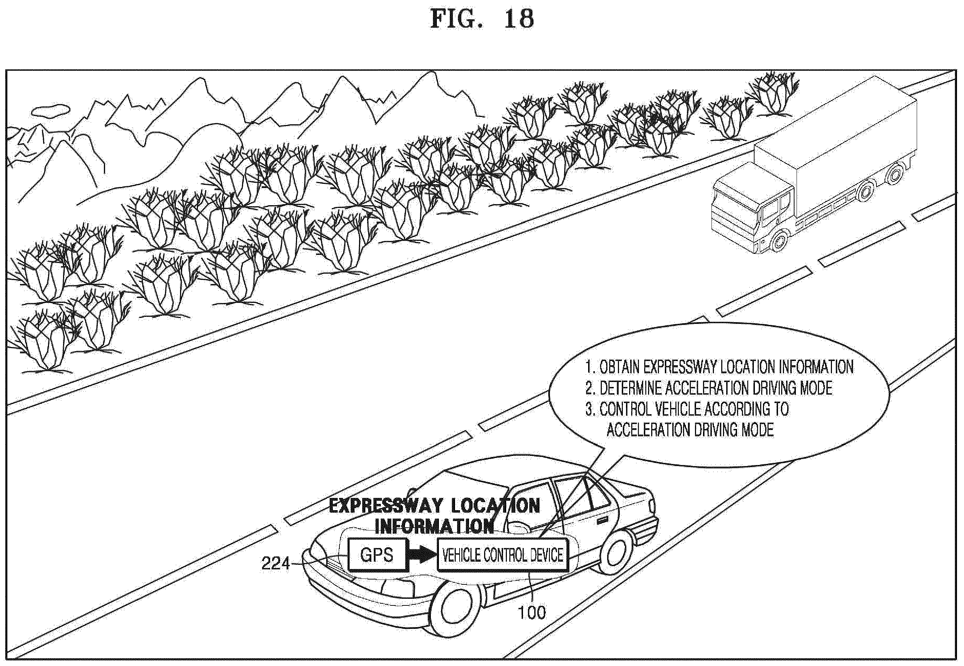

FIG. 18 shows an example of determining a driving mode based on expressway location information and controlling the autonomous vehicle 1 based on the determined driving mode, via the vehicle control device 100.

The GPS 224 of the autonomous vehicle 1 may obtain current location information of the autonomous vehicle 1. Next, the vehicle control device 100 may obtain the current location information of the autonomous vehicle 1 from the GPS 224.

Next, the vehicle control device 100 may recognize that a current location is an "expressway", based on the current location information. Thus, the vehicle control device 100 may determine a driving mode optimized for the passenger based on the "expressway", the current location. That is, since a driving mode of a high speed is suitable for the autonomous vehicle 1 in the expressway, the vehicle control device 100 may determine the driving mode optimized for the passenger as a high speed driving mode.

Thus, the vehicle control device 100 may control the autonomous vehicle 1 according to the determined high speed driving mode.

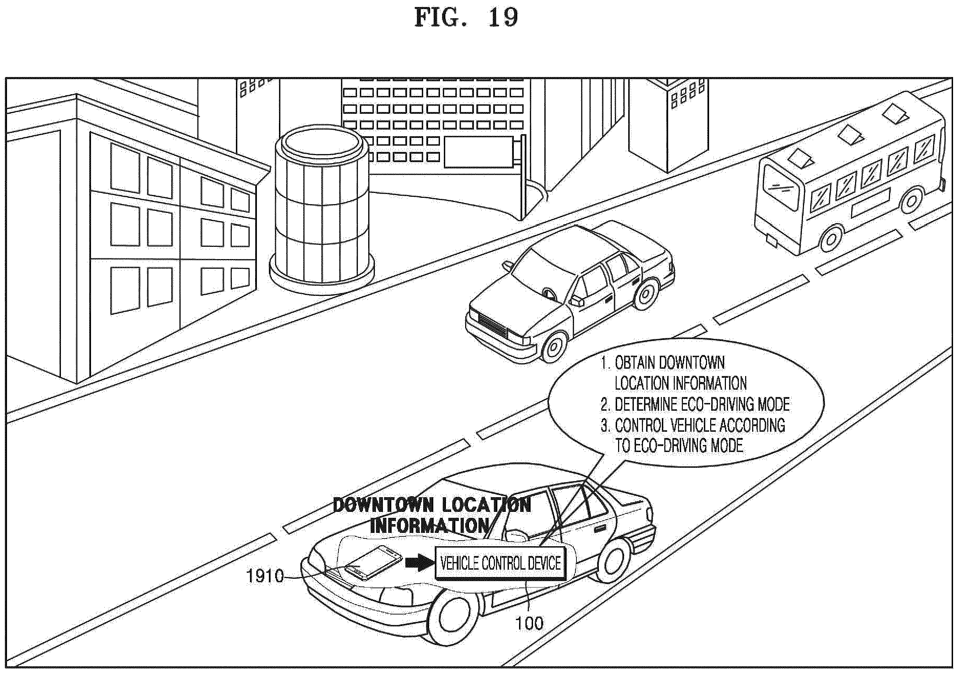

FIG. 19 shows an example of determining a driving mode based on downtown location information and controlling the autonomous vehicle 1 based on the determined driving mode, via the vehicle control device 100.

A mobile device 1910 of a passenger may obtain current location information of the autonomous vehicle 1 by using a GPS in the mobile device 1910. Next, the vehicle control device 100 may obtain the current location information of the autonomous vehicle 1 from the mobile device 1910.

Thereafter, the vehicle control device 100 may recognize that a current location of the autonomous vehicle 1 is in the downtown area, based on the current location information. Thus, the vehicle control device 100 may determine a driving mode optimized for the passenger based on the current location, "in the downtown area." That is, since there may be frequent situations in the downtown area, in which the autonomous vehicle 1 has to stop, the vehicle control device 100 may determine the driving mode optimized for the passenger as an eco-driving mode.

Thus, the vehicle control device 100 may control the autonomous vehicle 1 according to the determined eco-driving mode.

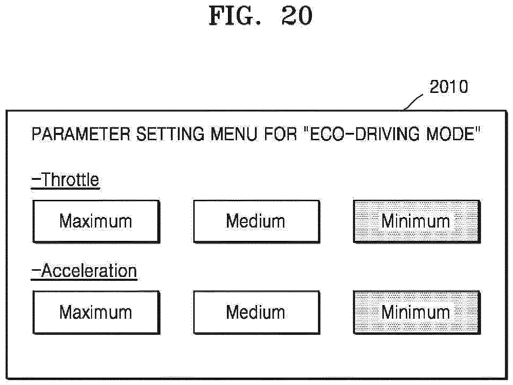

FIG. 20 shows an example of controlling the autonomous vehicle 1 via the vehicle control device 100, using the eco-driving mode.

The vehicle control device 100 may control the autonomous vehicle 1 based on a parameter setting menu 2010 for the eco-driving mode. For example, the vehicle control device 100 may provide the parameter setting menu 2010 to a passenger in advance and receive parameter values of the menu 2010 from the passenger. That is, as illustrated in FIG. 20, the passenger may set an open amount of a throttle and an acceleration value as the minimum values.

As another example, the vehicle control device 100 may receive the menu 2010 from a mobile device of the passenger and control the autonomous vehicle 1 according to the received menu 2010. The passenger may input parameter values for the eco-driving mode via the menu 2010 of the mobile device of the passenger.

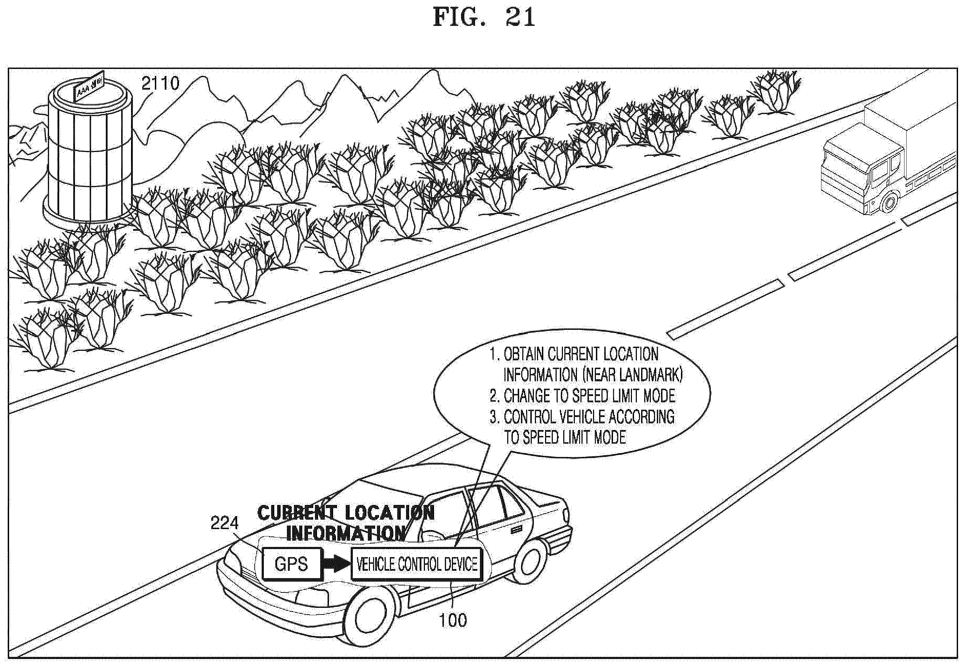

FIG. 21 shows an example of determining a driving mode based on near landmark location information and controlling the autonomous vehicle 1 based on the determined driving mode, via the vehicle control device 100.

The GPS 224 of the autonomous vehicle 1 may obtain current location information of the autonomous vehicle 1. Next, the vehicle control device 100 may obtain the current location information of the autonomous vehicle 1 from the GPS 224.

Next, the vehicle control device 100 may recognize that a current location of the autonomous vehicle 1 is near a specific landmark 2110, based on the obtained current location information. For example, when the current location is within a certain distance from the specific landmark 2110, the vehicle control device 100 may recognize that the current location is near the specific landmark 2110. Also, the vehicle control device 100 may store location information of the specific landmark 2110. For example, the vehicle control device 100 may pre-store location information of landmarks which the passenger is to go sightseeing for. Thus, the vehicle control device 100 may determine a driving mode optimized for the passenger based on the fact that the current location is near the specific landmark 2110. That is, when there is a landmark nearby, the vehicle control device 100 may determine the driving mode optimized for the passenger as a speed limit mode so that the passenger may more conveniently go sightsee the landmark.

Thus, the vehicle control device 100 may control the autonomous vehicle 1 according to the determined speed limit mode.

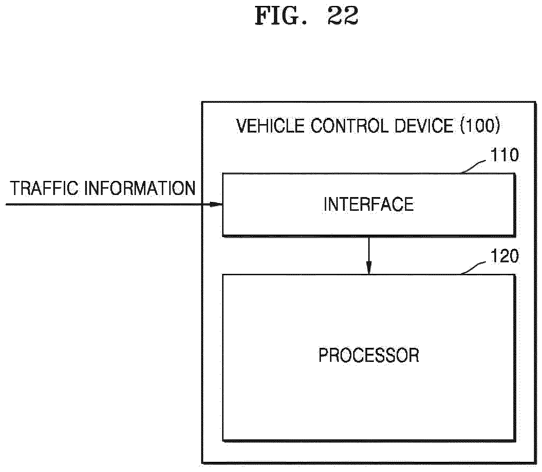

FIG. 22 shows an example of a vehicle control device determining a driving mode based on traffic information.

The interface 110 may obtain the traffic information as the ambient environment information of the autonomous vehicle 1. Also, the interface 110 may obtain the traffic information around the autonomous vehicle 1 based on location information of the autonomous vehicle 1. For example, the traffic information around the autonomous vehicle 1 may include not only information about a speed or a location of a vehicle ahead of the autonomous vehicle 1, but also information about whether the road in which the autonomous vehicle 1 drives has a traffic jam. For example, the interface 110 may obtain the traffic information around the autonomous vehicle 1 from an external traffic management system. As another example, the communication device 250 may obtain the traffic information around the autonomous vehicle 1 from the external traffic management system and transmit the obtained information to the interface 110. As another example, the sensing device 230 may sense the speed of the vehicle ahead of the autonomous vehicle 1 and transmit the sensed information to the interface 110. For example, the RADAR unit 226 of FIG. 2 may continually sense the speed of the vehicle ahead of the autonomous vehicle 1, and may transmit information about the sensed speed to the interface 110. Next, the processor 120 may recognize the traffic jam, when the speed of the vehicle ahead of the autonomous vehicle 1 is maintained to be equal to or lower than a certain speed for a certain period of time, based on the information about the sensed speed, transmitted to the interface 110.

The processor 120 may determine a driving mode optimized for the passenger based on the obtained traffic information. For example, when the obtained traffic information is information indicating a traffic jam, the processor 120 may determine the driving mode optimized for the passenger as an eco-driving mode, since there may be many situations in which the autonomous vehicle 1 has to stop. Also, as another example, when the obtained traffic information is information indicating smooth traffic flow, the processor 120 may determine the driving mode optimized for the passenger as an acceleration driving mode.

The processor 120 may control the autonomous vehicle 1 according to the determined driving mode.

Also, the processor 120 may provide information indicating that there will be a traffic jam after a certain time to a passenger via the output device 280 of FIG. 2, based on the traffic information obtained by the interface 110. For example, the processor 120 may inform the passenger of the information indicating that there will be a traffic jam in 15 seconds in the form of a sound signal via the output device 280. Also, the processor 120 may provide to the passenger information indicating that a current driving mode will be ended since there is a traffic jam after a certain time, via the output device 280.

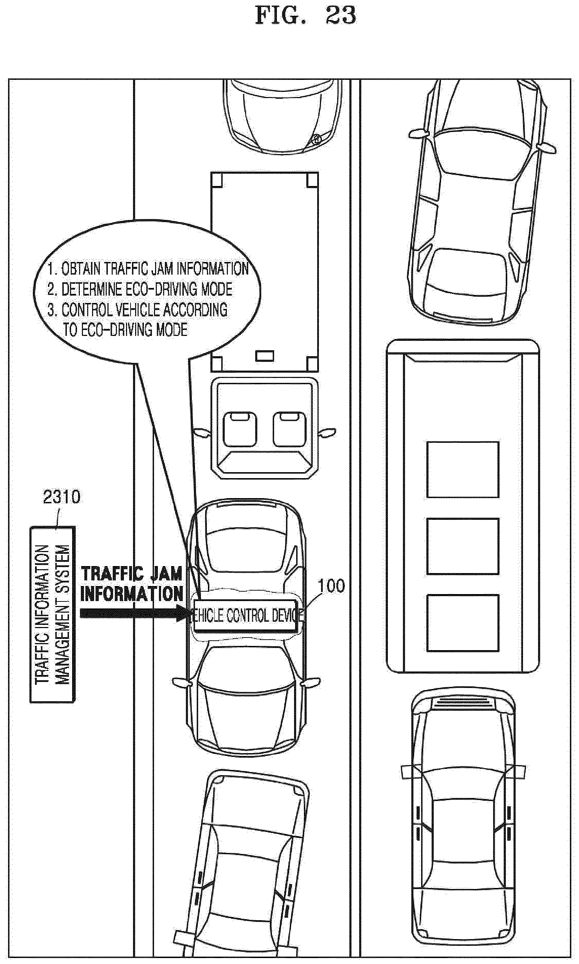

FIG. 23 shows an example of determining a driving mode based on traffic information and controlling the autonomous vehicle 1 according to the determined driving mode, via the vehicle control device 100.

The vehicle control device 100 may obtain traffic information around the vehicle control device 100 from an external traffic information management system 2310. That is, the vehicle control device 100 may obtain the traffic information around the vehicle control device 100 from the external traffic information management system 2310 by establishing communication with the external traffic information management system 2310.

The vehicle control device 100 may determine a driving mode optimized for the passenger based on the obtained traffic information. That is, since the traffic information is information indicating a traffic jam, the vehicle control device 100 may determine the driving mode optimized for the passenger as an eco-driving mode.

The vehicle control device 100 may control the autonomous vehicle 1 according to the determined driving mode.

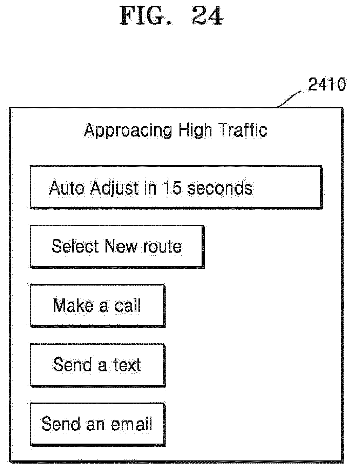

FIG. 24 shows an example of providing a graphical user interface (GUI) 2410 related to a traffic jam via the vehicle control device 100.

The vehicle control device 100 may provide the GUI 2410 to a passenger when a traffic jam is imminent. That is, when the autonomous vehicle 1 reaches a situation of the traffic jam in 15 seconds, the vehicle control device 100 may provide the GUI 2410 to the passenger. When the passenger selects "auto adjust in 15 seconds" in the GUI 2410, the vehicle control device 100 may control the autonomous vehicle 1 in a pre-set driving mode. For example, the vehicle control device 100 may change the driving mode of the autonomous vehicle 1 as an eco-driving mode, according to traffic jam information. Also, when the passenger selects "select new route" in the GUI 2410, the vehicle control device 100 may determine another driving path in which there is no traffic jam, and control the autonomous vehicle 1 to drive in a different driving path. Also, when the passenger selects "make a call", "send a text", or "send an email" in the GUI 2410, the vehicle control device 100 may transmit a pre-set message or voice to a pre-set person. For example, when the passenger selects "send a text" in the GUI 2410, the vehicle control device 100 may transmit a message including an expected arrival time of the passenger to a person who is to meet the passenger.

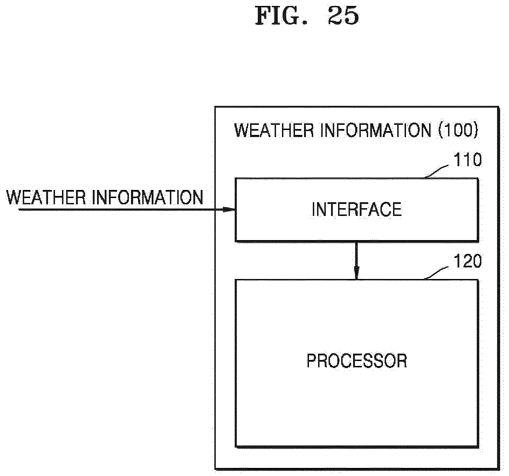

FIG. 25 shows an example of a vehicle control device determining a driving mode based on weather information.

The interface 110 may obtain the weather information as the ambient environment information of the autonomous vehicle 1. For example, the interface 110 may obtain the weather information around the autonomous vehicle 1 from an external weather information management system. Also, as another example, the sensing device 230 may sense a surrounding road state via a tire of the autonomous vehicle 1, the processor 120 may generate the weather information around the autonomous vehicle 1 based on the sensed surrounding road state, and the interface 110 may obtain the weather information from the processor 120. For example, the processor 120 may recognize that the surrounding road state is a wet state due to rain, based on information about friction of a ground contact area of the tire of the autonomous vehicle 1, which is sensed by the sensing device 230, and may generate the weather information indicating that it is raining. Next, the interface 110 may obtain the weather information indicating that it is raining from the processor 120.

The processor 120 may determine a driving mode optimized for the passenger based on the obtained weather information. For example, when the obtained weather information is information indicating that it is raining or is snowing around the autonomous vehicle 1, the processor 120 may determine the driving mode optimized for the passenger as a quiet driving mode or a speed limit mode for the safety of the passenger.

The processor 120 may control the autonomous vehicle 1 according to the determined driving mode.

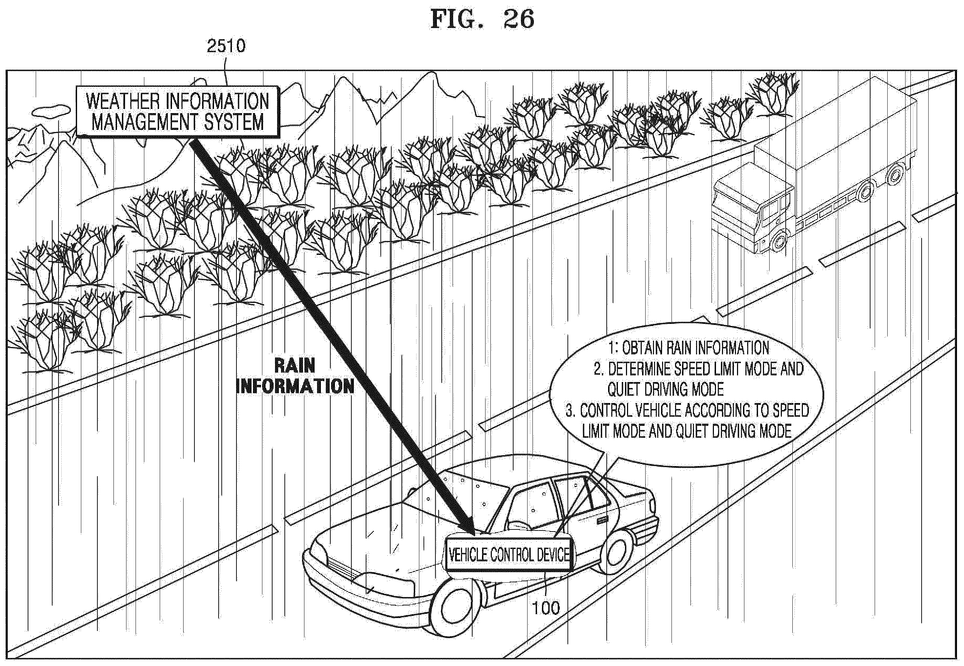

FIG. 26 shows an example of determining a driving mode based on weather information and controlling the autonomous vehicle 1 according to the determined driving mode, via the vehicle control device 100.

The vehicle control device 100 may obtain the weather information around the vehicle control device 100 from an external weather information management system 2510. That is, the vehicle control device 100 may obtain the weather information around the vehicle control device 100 from the external weather information management system 2510 by establishing communication with the external weather information management system 2510.

The vehicle control device 100 may determine a driving mode optimized for the passenger based on the obtained weather information. That is, since the weather information is information indicating that it is raining, the vehicle control device 100 may determine the driving mode optimized for the passenger as a speed limit mode or a quiet driving mode.

The vehicle control device 100 may control the autonomous vehicle 1 according to the determined driving mode.

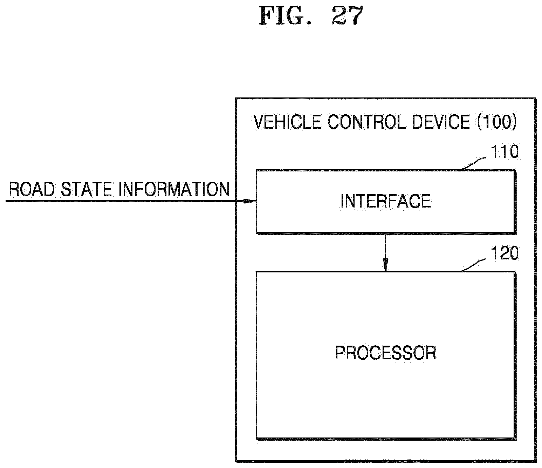

FIG. 27 shows an example of a vehicle control device determining a driving mode based on road state information.

The interface 110 may obtain the road state information as the ambient environment information of the autonomous vehicle 1. That is, the interface 110 may obtain the road state information around the autonomous vehicle 1. For example, the interface 110 may obtain the road state information from a device which may sense a road state. In detail, the sensing device 230 may obtain the road state information based on a vibration signal transmitted via a tire of the autonomous vehicle 1, and the interface 110 may receive the road state information obtained from the sensing device 230.

The processor 120 may determine a driving mode optimized for the passenger based on the obtained road state information. For example, when the obtained road state information is information indicating a mountain area covered with gravel/sand, the processor 120 may determine the driving mode optimized for the passenger as a ground-type mode suitable for the mountain area, for the safety of the passenger and minimizing the vibration of the autonomous vehicle 1.

The processor 120 may control the autonomous vehicle 1 according to the determined driving mode.

Also, the interface 110 may obtain information about a dangerous road. For example, the interface 110 may receive the information about a dangerous road from an external traffic management system.

The processor 120 may determine whether the autonomous vehicle 1 is near the dangerous road based on current location information. For example, the processor 120 may determine whether the autonomous vehicle 1 will reach the dangerous road in 15 seconds. When the autonomous vehicle 1 reaches the dangerous road, the processor 120 may control the autonomous vehicle 1 according to a degree of danger of the dangerous road. That is, according to the degree of danger of the dangerous road, the processor 120 may control the autonomous vehicle 1 to reduce an acceleration of the autonomous vehicle 1 and to drive more smoothly, for the safety of the passenger. For example, when the degree of danger of the dangerous road is low, the processor 120 may reduce an open amount of a throttle or a value of a lateral G-force according to a pre-set driving mode by 5%.

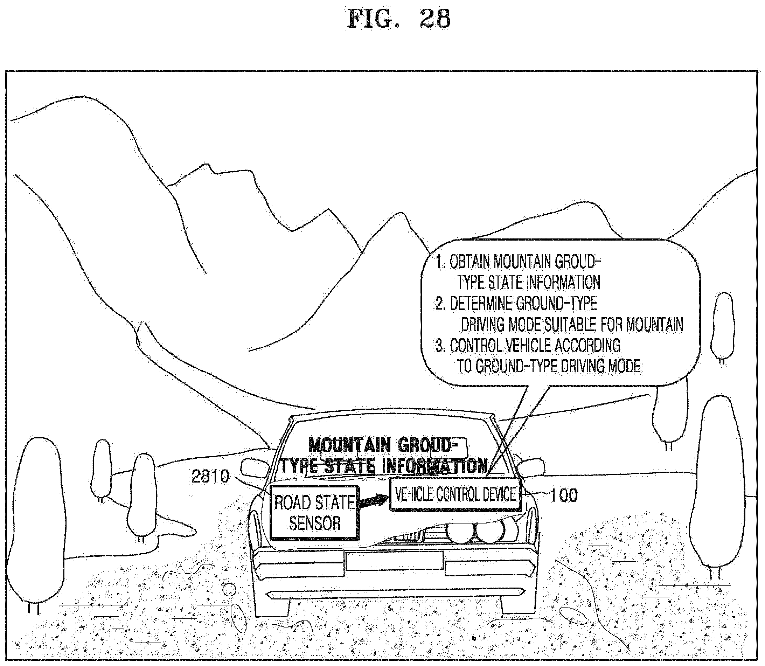

FIG. 28 shows an example of determining a driving mode based on road state information and controlling the autonomous device 1 according to the determined driving mode, via the vehicle control device 100.

A road state sensor 2810 may sense a vibration signal transmitted via a tire of the autonomous vehicle 1, and the vehicle control device 100 may obtain information that a road state is a mountain ground state based on the sensed vibration signal.

The vehicle control device 100 may determine the driving mode optimized for the passenger based on the obtained road state information. That is, since the road state information is the mountain ground, the vehicle control device 100 may determine the driving mode optimized for the passenger as a ground-type mode suitable for the mountain ground for the safety of the passenger and minimizing the vibration of the autonomous vehicle 1.

The vehicle control device 100 may control the autonomous vehicle 1 according to the determined ground-type mode. For example, the vehicle control device 100 may increase a suspension of the autonomous vehicle 1 and may convert the autonomous vehicle 1 into a four-wheel-drive vehicle to distribute the same proportion of driving force to the front wheels and rear wheels.

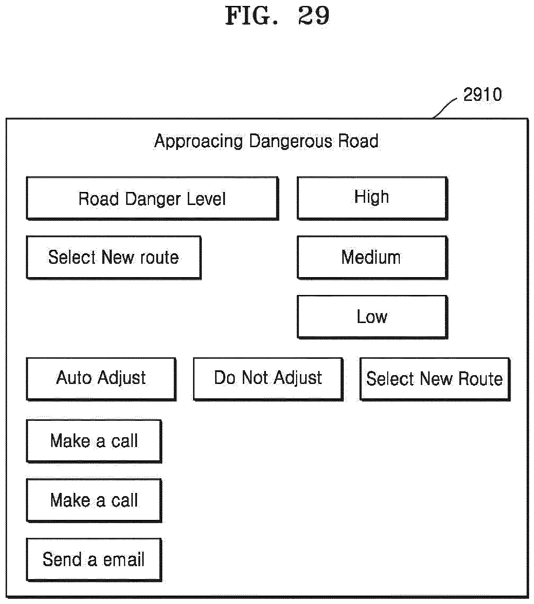

FIG. 29 shows an example of providing a GUI related to a dangerous road via the vehicle control device 100.

The vehicle control device 100 may provide a GUI 2910 to a passenger when a dangerous road is approaching. That is, when the autonomous vehicle 1 reaches the dangerous road in 15 seconds, the vehicle control device 100 may provide the GUI 2910 to the passenger. Items "high," "medium," and "low" shown in the GUI 2910 indicate a degree of danger the approaching dangerous road has. When the passenger selects "auto adjust" in the GUI 2910, the vehicle control device 100 may control the autonomous vehicle 1 according to a pre-set driving mode. For example, the vehicle control device 100 may partially adjust a parameter value corresponding to the pre-set driving mode, according to a degree of danger of the dangerous road. Also, when the passenger selects "select new route" in the GUI 2910, the vehicle control device 100 may determine another driving path including no dangerous road, and may control the autonomous vehicle 1 to drive through the other driving path. Also, when the passenger selects "make a call", "send a text", or "send an email" in the GUI 2910, the vehicle control device 100 may transmit a pre-set message or voice to a pre-set person. For example, when the passenger selects "send a text" in the GUI 2910, the vehicle control device 100 may send a message including an expected arrival time of the passenger to the person that the passenger is to meet with.

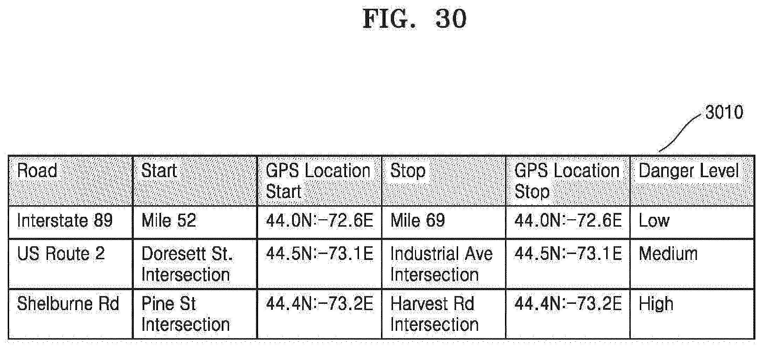

FIG. 30 shows an example of information about a dangerous road.

The vehicle control device 100 may obtain the information about a dangerous road 3010. The vehicle control device 100 may obtain the information about a dangerous road 3010 from an external traffic management system. As illustrated in FIG. 30, the vehicle control device 100 may obtain "mile 52" and "44.ON:-72.6E," the information of a start location of the dangerous road "interstate 89", and "mile 69" and "44.3:-72.7E," the information of an end location of the dangerous road "interstate 89." Also, the vehicle control device 100 may obtain information that a degree of danger of the dangerous road "interstate 89" is "low." The degree of danger among the information about a dangerous road 3010 may be set based on the number of accidents which have occurred in the corresponding dangerous road. For example, when an accident rate of the corresponding dangerous road is higher than an average accident rate of roads by 0% to 10%, the degree of danger of the corresponding dangerous road may be low, and when an accident rate of the corresponding dangerous road is higher than an average accident rate of roads by 25% or higher, the degree of danger of the corresponding dangerous road may be high.

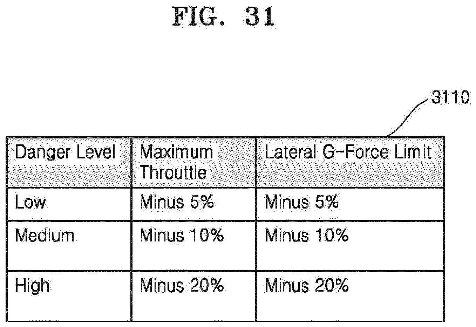

FIG. 31 shows an example of controlling the autonomous vehicle 1, via the vehicle control device 100, according to a degree of danger of a dangerous road.

The vehicle control device 100 may control the autonomous vehicle 1 based on a table 3110. That is, when the autonomous vehicle 1 drives a dangerous road having a low degree of danger, the vehicle control device 100 may reduce the maximum open amount of the throttle and the maximum lateral G-force, which are driving parameters corresponding to a pre-set driving mode, by 5%, respectively. Likewise, when the autonomous vehicle 1 drives a dangerous road having a medium degree of danger, the vehicle control device 100 may reduce the maximum open amount of the throttle and the maximum lateral G-force, which are the driving parameters corresponding to the pre-set driving mode, by 10%, respectively.

Referring to FIG. 3 again, the interface 110 may obtain at least one of other context information and other ambient environment information in addition to the pre-obtained context information or ambient environment information. For example, when the autonomous vehicle 1 drives according to a pre-set driving mode, the interface 110 may obtain the at least one of the other context information and the other ambient environment information. In detail, when the autonomous vehicle 1 drives according to an acceleration driving mode, the interface 110 may obtain traffic jam information as the other ambient environment information.

The processor 120 may change the driving mode optimized for the passenger, based on the at least one of the other context information and the other ambient environment information. That is, when the autonomous vehicle 1 drives according to the pre-set driving mode and the other context information or the other ambient environment information occurs, the processor 120 may change the driving mode optimized for the passenger. For example, when the autonomous vehicle 1 drives according to a high speed driving mode, the processor 120 may change the driving mode optimized for the passenger to an eco-driving mode from the high speed driving mode, based on the traffic jam information obtained by the interface 110.

The processor 120 may control the autonomous vehicle 1 according to the changed driving mode.

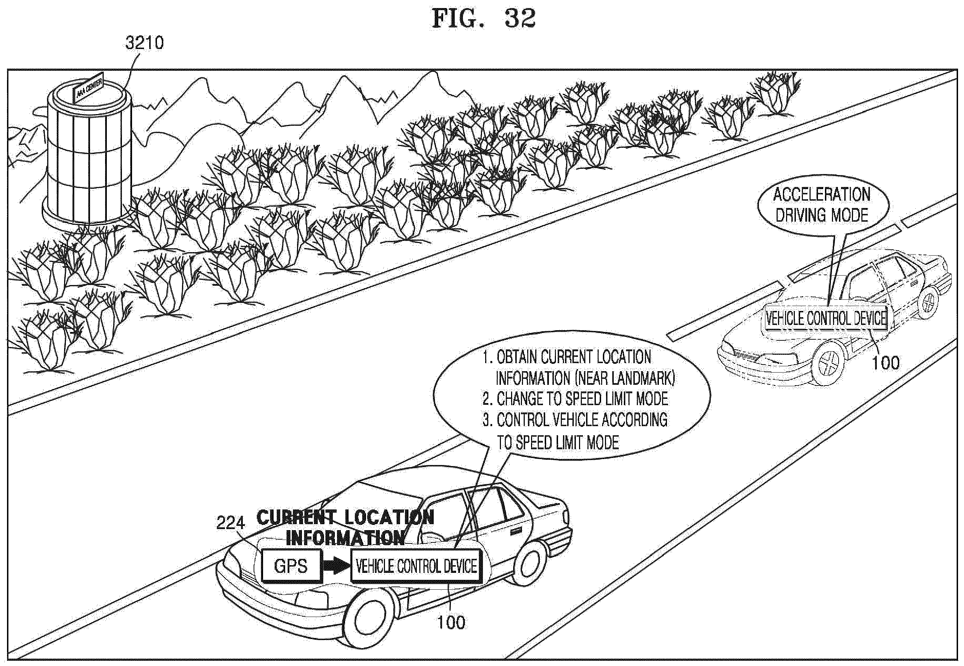

FIG. 32 shows an example of changing a driving mode, via the vehicle control device 100, based on other ambient environment information.

The vehicle control device 100 may determine the driving mode as an acceleration driving mode based on location information indicating an expressway, and the autonomous vehicle 1 may drive according to the acceleration driving mode under control of the vehicle control device 100.

When the autonomous vehicle 1 drives according to the acceleration driving mode, the vehicle control device 100 may obtain location information indicating that the autonomous vehicle 1 is near a landmark 3210. That is, the vehicle control device 100 may obtain current location information from the GPS 224 and may recognize that a current location of the autonomous vehicle 1 is near the landmark 2110, based on the obtained current location information. Thus, the vehicle control device 100 may change the driving mode optimized for the passenger to a speed limit mode from the acceleration driving mode, based on the location information indicating that the autonomous vehicle 1 is near the landmark 2110.

Thus, the vehicle control device 100 may control the autonomous vehicle 1 according to the changed speed limit mode.

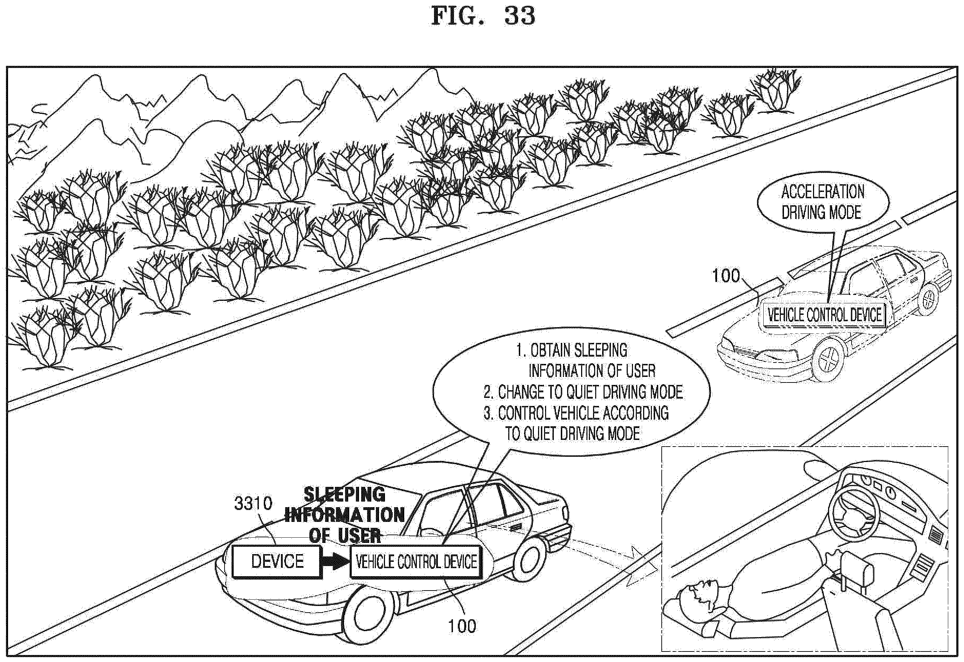

FIG. 33 shows an example of changing a driving mode, via the vehicle control device 100, based on other context information.

The vehicle control device 100 may determine the driving mode as an acceleration driving mode based on location information indicating an expressway, and the autonomous vehicle 1 may drive according to the acceleration driving mode under control of the vehicle control device 100.

When the autonomous vehicle 1 drives according to the acceleration driving mode, the vehicle control device 100 may obtain sleeping state information of a passenger. That is, the vehicle control device 100 may obtain the sleeping state information of the passenger from the device 3310 which may sense a physical state of the passenger. Thus, the vehicle control device 100 may change the driving mode optimized for the passenger from an acceleration driving mode to a quiet driving mode based on the sleeping state information of the passenger.

Thus, the vehicle control device 100 may control the autonomous vehicle 1 according to the changed quiet driving mode.

Referring to FIG. 3 again, the interface 110 may obtain at least two pieces of different information included in the context information and the ambient environment information. For example, the interface 110 may obtain information that a current location is an expressway, and traffic jam information around the autonomous vehicle 1. Also, as another example, the interface 110 may obtain schedule information of a passenger, smooth traffic information, and passenger identification information.

The processor 120 may determine the driving mode optimized for the passenger based on the obtained at least two pieces of different information and a pre-set priority order. That is, the processor 120 may determine any one of the obtained at least two pieces of different information by taking into account the pre-set priority order, and may determine the driving mode optimized for the passenger based on a result of the determination. For example, when the interface 110 obtains expressway location information and surrounding traffic jam information, and the pre-set priority order indicates that the surrounding traffic jam information is prior to the expressway location information, the processor 120 may determine the driving mode optimized for the passenger as an eco-driving mode, according to the surrounding traffic jam information. That is, the processor 120 may determine the eco-driving mode based on the surrounding traffic jam information as the driving mode optimized for the passenger, rather than an acceleration driving mode based on the expressway location information. The priority order with respect to the context information and the ambient environment information may be pre-set by the passenger.

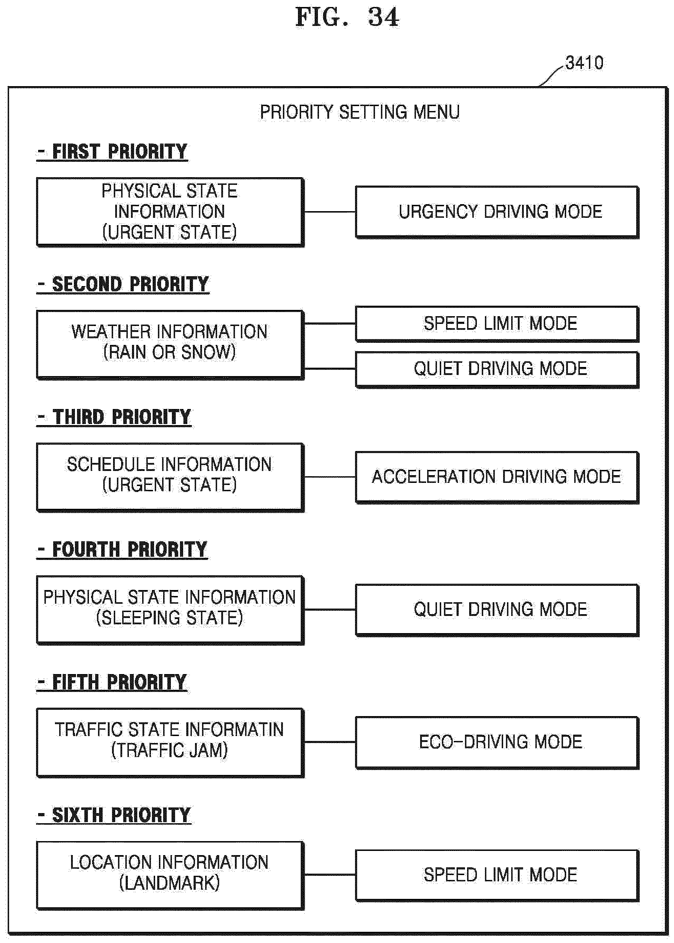

FIG. 34 shows an example of a priority order setting menu 3410.

For example, the vehicle control device 100 may provide the priority order setting menu 3410 to a passenger. For example, the vehicle control device 100 may display the priority order setting menu 3410 on a screen via the output device 280. The passenger may set the priority order with respect to the context information and the ambient environment information via the priority order setting menu 3410. As illustrated in FIG. 34, the passenger may set urgent state information among physical state information as the first priority information, and the vehicle control device 100 may determine an urgency driving mode as the driving mode optimized for the passenger by giving priority to the urgent state information among various pieces of context information and ambient environment information that are obtained.

As another example, a mobile device of the passenger may provide the priority order setting menu 3410 to the passenger. That is, the passenger may set a priority order with respect to the context information and the ambient environment information via the priority order setting menu 3410 provided by the mobile device, and the vehicle control device 100 may obtain information about the priority order from the mobile device of the passenger.

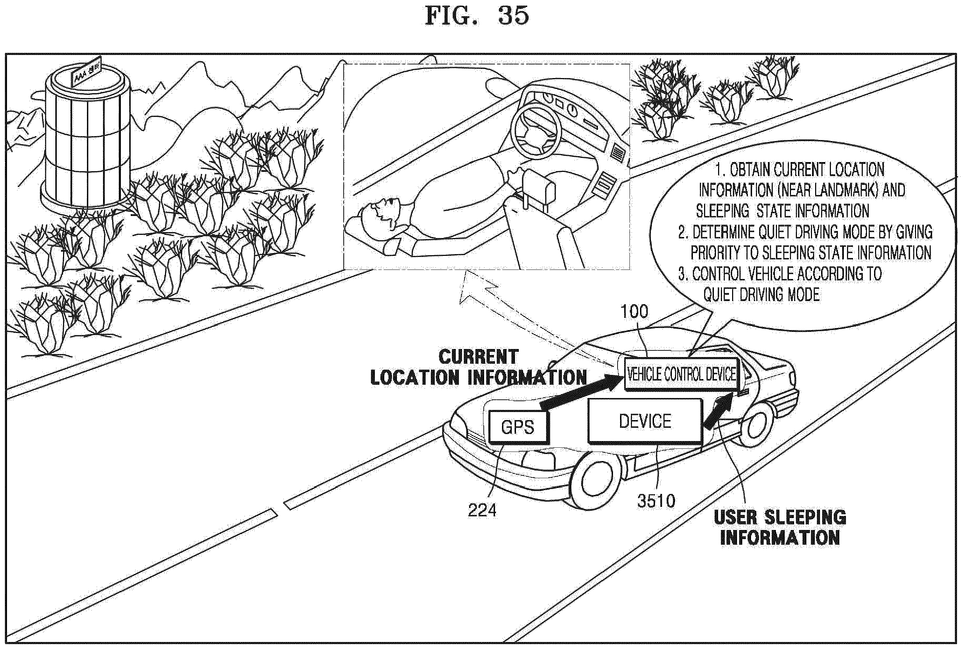

FIG. 35 shows an example of determining a driving mode optimized for a passenger, based on a priority order with respect to the obtained context information and ambient environment information, via the vehicle control device 100.

The vehicle control device 100 may obtain sleeping state information as physical state information of the passenger and surrounding landmark information as ambient environment information. For example, the vehicle control device 100 may obtain the sleeping state information from a device 3510 which may sense a physical state of the passenger, and the vehicle control device 100 may obtain the surrounding landmark information based on current location information obtained from the GPS 224.

Thereafter, the vehicle control device 100 may set the sleeping state information prior to the surrounding landmark information with respect to the obtained sleeping state information and surrounding landmark information, based on the priority order setting menu 3410 of FIG. 31. Thus, the vehicle control device 100 may determine the driving mode optimized for the passenger as a quiet driving mode, based on the sleeping state information.

Thus, the vehicle control device 100 may control the autonomous vehicle 1 based on the quiet driving mode.

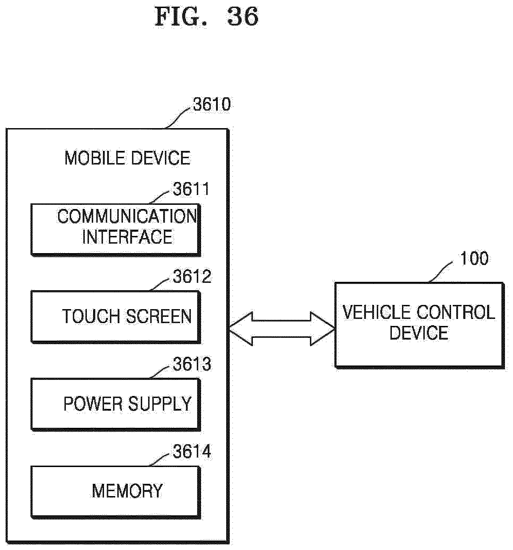

FIG. 36 is a view for describing an example of the vehicle control device 100 communicating with a mobile device 3610.

The vehicle control device 100 may be connected with the mobile device 3610 via communication via the internet or Bluetooth. For example, the mobile device 3610 may be a device of a passenger of the autonomous vehicle 1.

The mobile device 3610 may include a communication interface 3611, a touch screen 3612, a power supply 3613, and a memory 3614. The memory 3614 may include driving information for setting a driving mode and a driving parameter of the autonomous vehicle 1.

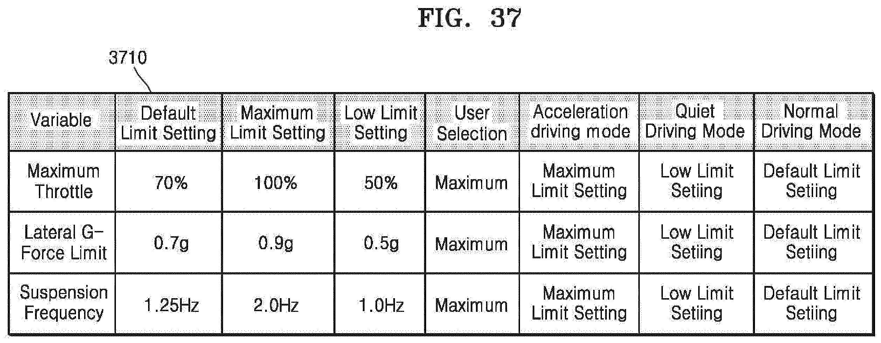

FIG. 37 shows an example of driving information 3710 which may be set in the mobile device 3610.

The mobile device 3610 of the passenger may provide the driving information 3710 for setting a driving parameter of the autonomous vehicle 1 to the passenger. That is, the passenger may adjust the driving parameter of the autonomous vehicle 1 via the driving information 3710 provided from the mobile device 3610. For example, the mobile device 3610 of the passenger may provide the driving information 3710 to the passenger via a touch screen. FIG. 37 illustrates the driving information 3710 for setting parameters related to a maximum open amount of a throttle, a maximum lateral G-force limit, and a suspension frequency, according to an embodiment.

As shown in the driving information 3710, the maximum open amount of the throttle may be set as 70%, the maximum lateral G-force limit may be set as 0.7g, and the suspension frequency may be set as 1.25Hz as default limit settings. Also, the maximum open amount of the throttle may be set as 100%, the maximum lateral G-force limit may be set as 0.9g, and the suspension frequency may be set as 2.00 Hz as high limit settings. Also, the maximum open amount of the throttle may be set as 50%, the maximum lateral G-force limit may be set as 0.5g, and the suspension frequency may be set as 1.00 Hz, as low limit settings. The described numbers may be changed by the passenger.

Also, the passenger may determine according to which one of the high limit settings, the low limit settings, and the default limit settings, each of the maximum open amount of the throttle, the maximum lateral G-force limit, and the suspension frequency is to be set. For example, as illustrated in FIG. 37, the passenger may set each of the maximum open amount of the throttle, the maximum lateral G-force limit, and the suspension frequency as the high limit settings.

Also, the passenger may set driving parameters corresponding to a driving mode via the driving information 3710. That is, the passenger may set each of the maximum open amount of the throttle, the maximum lateral G-force limit, and the suspension frequency as the high limit settings, in the case of the acceleration driving mode. Likewise, in the case of the quiet driving mode and the normal driving mode, the driving parameters corresponding to the driving mode may be set via the driving information 3710.

Thus, when the passenger sets the driving information 3710, the vehicle control device 100 may receive parameter information set in the driving information 3710 from the mobile device 3610 of the passenger, and control the autonomous vehicle 1 based on the driving information 3710.

The vehicle control device 100 of FIG. 36 may include a driving profile for controlling the autonomous vehicle 1.

The driving profile may be set by a passenger and may be stored in the mobile device 3610 of the passenger. The driving profile may include critical values of the driving parameter, such as acceleration, brake force, and suspension. The critical values of the driving parameter may be set not to exceed a safety limit. The safety limit may be set by taking into account a road situation, traffic regulations, how adjacent the autonomous vehicle 1 is to other vehicles on the road, technical capability of the autonomous vehicle 1, etc. The driving profile may be updated by the passenger. Also, the driving profile may be updated while the autonomous vehicle 1 drives.

The driving profile may be downloaded to the vehicle control device 100 from the mobile device 3610 of the passenger. Communication between the mobile device 3610 and the vehicle control device 100 may be formed via short range communication, such as near-field communication (NFC) and Bluetooth. Also, the vehicle control device 100 may use a wireless communication method, such as Wi-Fi or cellular communication. For example, the vehicle control device 100 may collect information by accessing a road history network via the internet. The road history network may provide information about a danger related to a specific road, and may be provided from an external traffic management system.

The driving profile may be adjusted based on the information provided from the road history network.

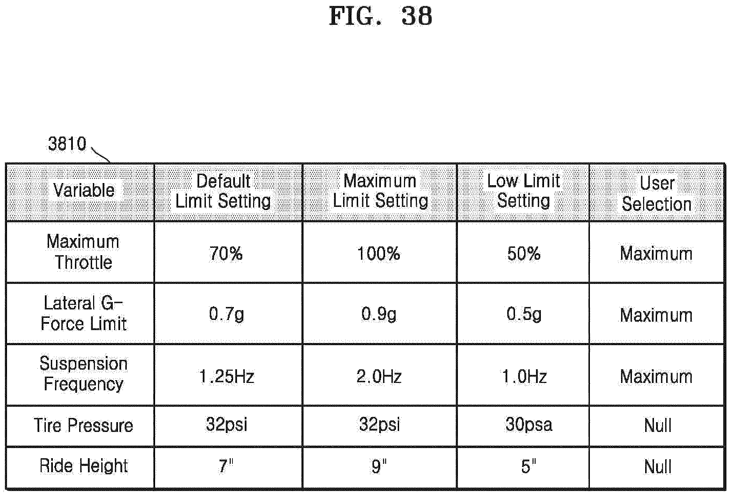

FIG. 38 shows an example of a driving profile 3810 provided by the vehicle control device 100.

The vehicle control device 100 may provide the driving profile 3810 for setting a driving parameter to a passenger. That is, the passenger may adjust the driving parameter of the autonomous vehicle 1 via the driving profile 3810 provided from the vehicle control device 100. FIG. 38 illustrates the driving profile 3810 for setting the parameters related to a maximum open amount of a throttle, a maximum lateral G-force limit, a suspension frequency, a tire pressure, and a ride height.

As shown in the driving profile 3810, the maximum open amount of the throttle may be set as 70%, the maximum lateral G-force limit may be set as 0.7g, the suspension frequency may be set as 1.25Hz, the tire air pressure may be set as 32psi, and the ride height may be set as 7 inches, as default limit settings. Also, the high limit settings and the low limit settings may be set as illustrated in FIG. 38.

Also, the passenger may determine according to which of the high limit settings, the low limit settings, and the default limit settings, each of the maximum open amount of the throttle, the maximum lateral G-force limit, and the suspension frequency is to be set. For example, as illustrated in FIG. 38, the passenger may set each of the maximum open amount of the throttle, the maximum lateral G-force limit, and the suspension frequency as the high limit settings.

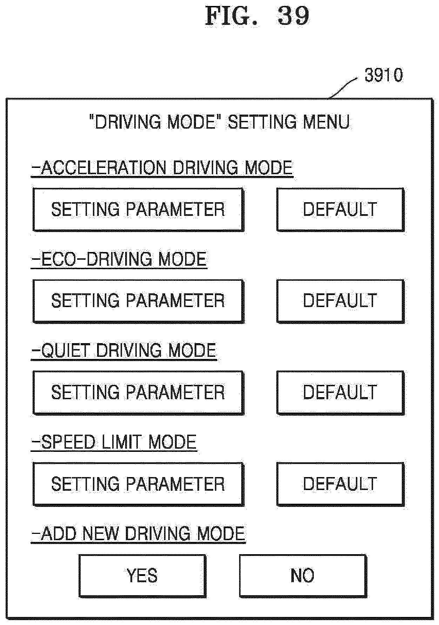

FIG. 39 shows an example of a menu 3910 for setting a driving mode.

The vehicle control device 100 may provide the menu 3910 for setting a driving mode to a passenger. That is, the passenger may set a parameter of each driving mode via the menu 3910 provided by the vehicle control device 100. For example, when the passenger selects a "parameter setting" menu of an acceleration driving mode, the vehicle control device 100 may additionally provide a menu for setting a parameter value for the acceleration driving mode to the passenger. Also, when the passenger selects a "default" menu of the acceleration driving mode, the vehicle control device 100 may set a parameter value for the acceleration driving mode as set before.

Also, the passenger may add a new driving mode via the menu 3910. Also, the passenger may set a driving parameter for the new driving mode via the menu 3910, and may set context information or ambient environment information that requires a new driving mode. For example, when the passenger wants the autonomous vehicle 1 to drive by maintaining a pre-determined speed at night or dawn, the passenger may newly add a dawn driving mode. Thus, when the current time is night or dawn, the vehicle control device 100 may determine the driving mode optimized for the passenger as the dawn driving mode, may control the autonomous vehicle 1 to drive by maintaining a pre-determined speed according to the determined dawn driving mode.

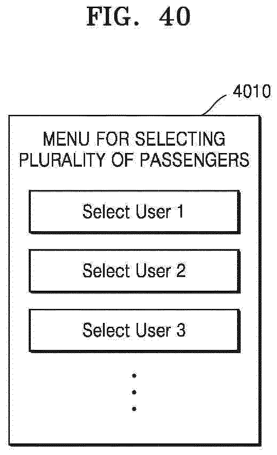

FIG. 40 shows an example of a menu 4010 for selecting a passenger from among a plurality of passengers in the autonomous vehicle 1.

For example, when there are the plurality of passengers in the autonomous vehicle 1, the vehicle control device 100 may provide the menu 4010 for selecting based on which passenger, a driving mode is to be determined, to the passenger. That is, since the driving mode optimized for the passenger may be different for each of the plurality of passengers, the vehicle control device 100 may determine the driving mode based on the passenger selected via the menu 4010.

As another example, the vehicle control device 100 may recognize the plurality of passengers in the autonomous vehicle 1 by sensing a mobile device of each of the plurality of passengers in the autonomous vehicle 1. Thus, the vehicle control device 100 may provide to the passenger the menu 4010 for asking to select a mobile device of a specific passenger from among the plurality of passengers User 1, User 2, and User 3, ... Thus, the vehicle control device 100 may determine the driving mode based on the mobile device of the specific passenger selected via the menu 4010.

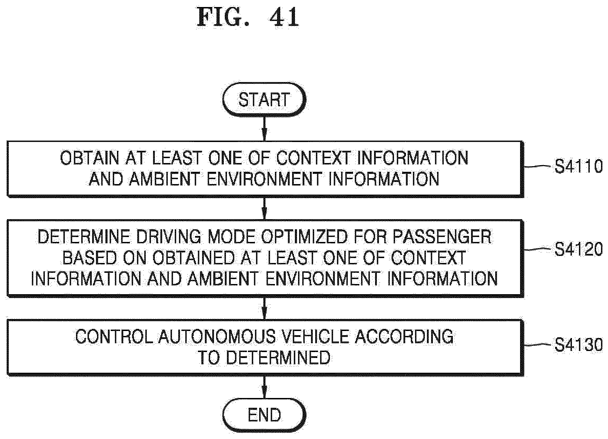

FIG. 41 shows an example of a method of controlling the autonomous vehicle 1.

The method illustrated in FIG. 41 may be performed by the vehicle control device 100 of FIGS. 3 through 40, and thus, repeated descriptions will not be made.

In operation S4110, the vehicle control device 100 may obtain driving context information. The driving context information may denote user environment information describing under which circumstance a user of the autonomous vehicle 1 is, and thus, the vehicle control device 100 may obtain the user environment information. The driving context information may include at least one of context information about the passenger and ambient environment information of the autonomous vehicle 1, and thus, the vehicle control device 100 may obtain the at least one of context information about a passenger of the autonomous vehicle 1 and the ambient environment information of the autonomous vehicle 1. The context information may include at least one of destination information of the passenger, schedule information of the passenger, physical state information of the passenger, and identification information of the passenger. Also, the ambient environment information may include at least one of weather information, traffic information, road state information around the autonomous vehicle 1, and location information of the autonomous vehicle 1.

Also, the vehicle control device 100 may obtain at least one of other context information and other ambient environment information in addition to the pre-obtained context information or ambient environment information. For example, when the autonomous vehicle 1 drives according to a pre-set driving mode, the vehicle control device 100 may obtain the at least one of the other context information and the ambient environment information.

Also, the vehicle control device 100 may obtain at least two pieces of different information included in the context information and the ambient environment information. For example, the vehicle control device 100 may obtain information indicating that a current location of the autonomous vehicle 1 is an expressway and information of a traffic jam around the autonomous vehicle 1.

In operation S4120, the vehicle control device 100 may determine the driving mode optimized for the passenger based on the information obtained in operation S4110. That is, the vehicle control device 100 may determine a situation in which the passenger is without passenger intervention, based on the at least one of context information about a passenger and ambient environment information, and determine a driving mode suitable for the determined situation. The driving mode may include an acceleration driving mode for increasing an accelerating performance of the autonomous vehicle 1, an eco-driving mode for increasing fuel efficiency of the autonomous vehicle 1, a quiet driving mode for minimizing vibration and acceleration of the autonomous vehicle 1, a speed limit mode for driving at a speed equal to or lower than a certain speed, a ground-type mode optimized for a certain ground type, or an urgency driving mode for an urgent situation of the passenger. Also, the vehicle control device 100 may change the driving mode optimized for the passenger, based on the at least one of the other context information and the other ambient environment information, in addition to the pre-obtained context information or ambient environment information. That is, when the autonomous vehicle 1 drives according to the pre-set driving mode, and other context information or other ambient environment information occurs, the vehicle control device 100 may change the driving mode optimized for the passenger.

Also, the vehicle control device 100 may determine the driving mode optimized for the passenger, based on at least two pieces of different information that are obtained and a pre-set priority order. That is, the vehicle control device 100 may determine specific information from the obtained two pieces of different information by taking into account the pre-set priority order, and determine the driving mode optimized for the passenger based on the determined specific information. For example, when the information obtained by the vehicle control device 100 is expressway location information and surrounding traffic jam information, since the surrounding traffic jam information is prior to the expressway location information according to the pre-set priority order, the vehicle control device 100 may determine the driving mode optimized for the passenger as the eco-driving mode, according to the surrounding traffic jam information. That is, the vehicle control device 100 may determine the eco-driving mode according to the surrounding traffic jam information as the driving mode optimized for the passenger, rather than the acceleration driving mode according to the expressway location information.

Also, the vehicle control device 100 may determine a driving style based on the user environment information obtained in operation S4110.

In operation S4130, the vehicle control device 100 may control the autonomous vehicle 1 according to the driving mode determined in operation S4120. For example, the vehicle control device 100 may adjust a driving parameter according to the determined driving mode. Also, the vehicle control device 100 may control a propulsion device or the ambient device of the autonomous vehicle 1, according to the determined driving mode.

According to another embodiment, the vehicle control device 100 may provide the driving mode determined in operation S4120 to a user, and when the passenger inputs a selection of the driving mode, may control the autonomous vehicle 1 according to the driving mode selected in operation S4130.

Here, the vehicle control device 100 may present one driving mode or a plurality of driving modes to the passenger. When the plurality of driving modes are presented, priority order information with respect to the driving modes suitable for a current situation may be provided together, or information about a highest priority driving mode may be provided together. When one driving mode is presented, the passenger may accept the presented driving mode or request other driving modes. Likewise, when the plurality of driving modes are presented, the passenger may select one of the presented driving modes or request other driving modes.

According to another embodiment, the vehicle control device 100 may provide the driving mode determined in operation S4120 to the user, and control the autonomous vehicle 1 according to the driving mode determined in operation S4130, when there is no selection of the driving mode from the passenger for a certain time. When the plurality of driving modes are presented, and there is no driving mode selection of the passenger for a certain time, the vehicle control device 100 may control the autonomous vehicle 1 according to the driving mode having the highest priority order.

The vehicle control device 100 may present the driving mode to the user via an output device, such as a speaker or a display, and may receive an input of the selection of the driving mode or the request for the other driving modes from the user via the input device 260.

The embodiments described above may be applied not only to the autonomous vehicle but also to the manually driven vehicle. For example, when a driving mode is determined based on the context information about the passenger or the ambient environment information, the vehicle control device 100 may set or change a driving parameter, such as a suspension or brake sensitivity according to the determined driving mode, even when the passenger manually drives the vehicle. In this case, the passenger may be a driver, and the driver may have different driving experiences according to the driving modes.

The device described herein may comprise a processor, a memory for storing program data and executing it, a permanent storage such as a disk drive, a communication port for handling communications with external devices, and user interface devices, etc. Any processes may be implemented as software modules or algorithms, and may be stored as program instructions or computer readable codes executable by a processor on a computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media can be read by the computer, stored in the memory, and executed by the processor.

The present invention may be described in terms of functional block components and various processing steps. Such functional blocks may be realized by any number of hardware and/or software components configured to perform the specified functions. For example, the present invention may employ various integrated circuit components, e.g., memory elements, processing elements, logic elements, look-up tables, and the like, which may carry out a variety of functions under the control of one or more microprocessors or other control devices. Similarly, where the elements of the present invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the present invention could employ any number of conventional techniques for electronics configuration, signal processing and/or control, data processing and the like. The words "mechanism" and "element" are used broadly and are not limited to mechanical or physical embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

The use of the terms "a" and "an" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the present invention.

It should be understood that embodiments described herein should be considered in a descriptive sense only and not for purposes of limitation. Descriptions of features or aspects within each embodiment should typically be considered as available for other similar features or aspects in other embodiments.

While one or more embodiments have been described with reference to the figures, it will be understood by those of ordinary skill in the art that various changes in form and details may be made therein without departing from the spirit and scope as defined by the following claims.

## Claims

1. A device for controlling an autonomous vehicle, the device comprising:
an interface configured to obtain at least one of context information about a passenger of the autonomous vehicle and ambient environment information of the autonomous vehicle; and
a processor configured to determine a driving mode optimized for the passenger based on the obtained at least one of the context information and the ambient environment information, and control the autonomous vehicle according to the determined driving mode.

2. The device of claim 1, wherein the interface is configured to obtain at least one of other context information and other ambient environment information, and
the processor is configured to change the driving mode, based on the at least one of the other context information and the other ambient environment information.

3. The device of claim 1, wherein the interface is configured to obtain at least two pieces of different information comprised in the context information and the ambient environment information, and
the processor is configured to determine the driving mode optimized for the passenger, based on a pre-set priority order and the obtained at least two pieces of different information.

4. The device of claim 1, wherein the processor is configured to determine the driving mode corresponding to the obtained at least one of the context information and the ambient environment information, based on a connection relationship between obtainable context information and a driving mode applicable to the autonomous vehicle.

5. The device of claim 4, wherein the connection relationship is pre-set by the passenger or determined based on learning of a driving history of the passenger.

6. The device of claim 1, wherein the processor is configured to control a driving parameter of the autonomous vehicle, according to the determined driving mode.

7. The device of claim 1, wherein the interface is configured to obtain destination information of the passenger as the context information, and
the processor is configured to determine the driving mode of the autonomous vehicle, based on the obtained destination information.

8. The device of claim 1, wherein the interface is configured to obtain schedule information of the passenger as the context information, and
the processor is configured to determine the driving mode of the autonomous vehicle, based on the obtained schedule information.

9. The device of claim 8, wherein the interface is configured to obtain the schedule information from a mobile device of the passenger.

10. The device of claim 1, wherein the interface is configured to obtain physical state information of the passenger as the context information, and
the processor is configured to determine the driving mode of the autonomous vehicle, based on the obtained physical state information.

11. The device of claim 10, wherein the interface is configured to obtain the physical state information from a device sensing a physical state of the passenger.

12. The device of claim 1, wherein the interface is configured to obtain passenger identification information of the autonomous vehicle as the context information, and
the processor is configured to determine the driving mode of the autonomous vehicle, based on the obtained passenger identification information.

13. The device of claim 1, wherein the interface is configured to obtain location information of the autonomous vehicle as the ambient environment information, and
the processor is configured to determine the driving mode of the autonomous vehicle, based on the obtained location information.

14. The device of claim 1, wherein the interface is configured to obtain traffic state information around the autonomous vehicle as the ambient environment information, and
the processor is configured to determine the driving mode of the autonomous vehicle, based on the obtained traffic state information.

15. The device of claim 1, wherein the interface is configured to obtain road state information around the autonomous vehicle as the ambient environment information, and
the processor is configured to determine the driving mode of the autonomous vehicle, based on the obtained road state information.

16. The device of claim 1, wherein the interface is configured to obtain weather information around the autonomous vehicle as the ambient environment information, and
the processor is configured to determine the driving mode of the autonomous vehicle, based on the obtained weather information.

17. A method of controlling an autonomous vehicle, the method comprising:
obtaining at least one of context information about a passenger of the autonomous vehicle and ambient environment information of the autonomous vehicle;
determining a driving mode optimized for the passenger, based on the obtained at least one of the context information and the ambient environment information; and
controlling the autonomous vehicle according to the determined driving mode.

18. The method of claim 17, wherein the obtaining of the at least one of the context information and the ambient environment information comprises obtaining at least one of other context information and other ambient environment information, and
the determining of the driving mode comprises changing the driving mode, based on the at least one of the other context information and the other ambient environment information.

19. The method of claim 17, wherein the obtaining of the at least one comprises obtaining at least two pieces of different information comprised in the context information and the ambient information, and
the determining of the driving mode comprises determining the driving mode optimized for the passenger, based on a pre-set priority order and the obtained at least two pieces of different information.

20. The method of claim 17, wherein the determining of the driving mode comprises determining the driving mode corresponding to the obtained at least one of the context information and the ambient environment information, based on a connection relationship between obtainable context information and a driving mode applicable to the autonomous vehicle.

21. The method of claim 20, wherein the connection relationship is pre-set by the passenger or determined based on learning of a driving history of the passenger.

22. The method of claim 17, wherein the controlling of the autonomous vehicle comprises controlling a driving parameter of the autonomous vehicle, according to the determined driving mode.

23. The method of claim 17, wherein the obtaining of the at least one comprises obtaining destination information of the passenger as the context information, and
the determining of the driving mode comprises determining the driving mode of the autonomous vehicle, based on the obtained destination information.

24. The method of claim 17, wherein the obtaining of the at least one comprises obtaining schedule information of the passenger as the context information, and
the determining of the driving mode comprises determining the driving mode of the autonomous vehicle, based on the obtained schedule information.

25. The method of claim 24, wherein the obtaining of the at least one comprises obtaining the schedule information from a mobile device of the passenger.

26. The method of claim 17, wherein the obtaining of the at least one comprises obtaining physical state information of the passenger as the context information, and
the determining of the driving mode comprises determining the driving mode of the autonomous vehicle, based on the obtained physical state information.

27. The method of claim 26, wherein the obtaining of the at least one comprises obtaining the physical state information from a device sensing a physical state of the passenger.

28. The method of claim 17, wherein the obtaining of the at least one comprises obtaining passenger identification information of the autonomous vehicle as the context information, and
the determining of the driving mode comprises determining the driving mode of the autonomous vehicle, based on the obtained passenger identification information.

29. The method of claim 17, wherein the obtaining of the at least one comprises obtaining location information of the autonomous vehicle as the ambient environment information, and
the determining of the driving mode comprises determining the driving mode of the autonomous vehicle, based on the obtained location information.

30. The method of claim 17, wherein the obtaining of the at least one comprises obtaining traffic state information around the autonomous vehicle as the ambient environment information, and
the determining of the driving mode comprises determining the driving mode of the autonomous vehicle, based on the obtained traffic state information.

31. The method of claim 17, wherein the obtaining of the at least one comprises obtaining road state information around the autonomous vehicle as the ambient environment information, and
the determining of the driving mode comprises determining the driving mode of the autonomous vehicle, based on the obtained road state information.

32. The method of claim 17, wherein the obtaining of the at least one comprises obtaining weather information around the autonomous vehicle as the ambient environment information, and
the determining of the driving mode comprises determining the driving mode of the autonomous vehicle, based on the obtained weather information.

33. A non-transitory computer-readable recording medium having recorded thereon a computer program for executing the method of claim 17.

34. A method of controlling a vehicle, the method comprising:
obtaining user environment information;
determining a driving style, based on the user environment information; and
setting a driving parameter of the vehicle according to the driving style.
